# EUROPÄISCHE PATENTANMELDUNG

(11) **EP 3 865 455 A1**
(43) Veröffentlichungstag der Anmeldung: **18.08.2021**
(21) Anmeldenummer: 20157763.2
(22) Anmeldetag: 17.02.2020
(51) Int. Cl.: C01B 3/04, C01B 13/02, C25B 1/02, B01J 19/08, F02B 43/10, F02M 21/02

(54) **VERFAHREN UND VORRICHTUNG ZUR GEWINNUNG VON BROWNS-GAS UND/ODER SAUERSTOFF UND WASSERSTOFF, INSBESONDERE FÜR VERBRENNUNGSMOTOREN, HEIZUNGSBRENNER ODER BRENNSTOFFZELLEN**

(71) Anmelder: Intergreentech GmbH, 89155 Erbach (DE); Sauer, Harald G.S., 88138 Sigmarszell (DE); Braunsteffer, Sen., Josef, 89155 Erbach (DE)
(72) Erfinder: SAUER, Harald, 89584 Ehingen (DE); BRAUNSTEFFER sen., Josef, 89155 Erbach (DE); WESTBROOK, Craig, Katy, Tx 77450 (US)
(74) Vertreter: Riebling, Peter

(57) **Zusammenfassung**

1. Verfahren zur Gewinnung von Brown's-Gas und/oder Sauerstoff und Wasserstoff, insbesondere für Verbrennungsmotoren oder Brennstoffzellen unter Anwendung eines physikalischen Spaltungsverfahrens unter Anwendung einer Abfolge von unterschiedlichen Erregungsverfahren bei HHO mit anschließender Trennung der Gase H2 und O2, wobei
1.1 Wasser in eine Reaktorzelle (28) eingespeist wird
1.2 danach die Wassermoleküle ionisiert werden
1.3 danach durch Permanentmagneten oder Magnetspulen ausgerichtet werden,
1.4 danach mit einem Radiosignal mit einer bestimmten Frequenz in Schwingung versetzt und einen Plasmazustand erreichen
1.5 wobei In diesem Plasmazustand die Wassermoleküle speziell geformte und angeordnete Elektroden passiert, an denen spezifische Spannungen impulsweise angesteuert anliegen, wodurch eine Teilmenge Wasserstoff und Sauerstoff abgeschieden wird.
1.6 wobei die nicht gespaltene Fraktion des Wassers in die Reaktorzelle (28) zurückgeführt wird und dadurch kontinuierlich höhere Erregungszustände erreicht, wodurch der Wirkungsgrad der Gaserzeugung gesteigert ist

## Beschreibung

Gegenstand der Erfindung ist ein Verfahren und eine Vorrichtung zur Gewinnung von Browns-Gas und/oder Sauerstoff und Wasserstoff nach dem Oberbegriff des Patentanspruchs 1.

### 1. Hintergrund der Erfindung

Den Hintergrund der Erfindung wird durch einen Internet-Auszug aus dem Lexikon WIKIPEDIA wie folgt beschrieben:
"Als HHO-Zelle wird eine Zelle bezeichnet, die zur Wasserelektrolyse in Kraftfahrzeugen verwendet wird. Bei der Verbrennung des Elektrolysegases im Motor soll eine Treibstoffersparnis erzielt werden.

HHO-Zellen können als Nasszellen und Trockenzellen aufgebaut werden. Bei einer Nasszelle befinden sich die Elektroden in einem Gefäß und sind komplett von Wasser umspült. Das Gefäß ist gasdicht gebaut, damit das Gas in den Gasschlauch fließen kann.

Ganz anders ist der Aufbau der Trockenzelle. Dort kommt kein Gefäß zum Einsatz, sondern die Elektroden selbst bilden ein Gefäß, so dass die Zelle nach außen trocken bleibt. Während eine Nasszelle wie eine Wanne das Wasser für die Elektrolyse hält, muss bei einer Trockenzelle für einen Zulauf von Wasser gesorgt werden, denn die Trockenzelle würde ohne ständigen Wasserzulauf sehr schnell "austrocknen" und überhitzen. Für den Wasserzulauf sorgt ein Wassertank, der oberhalb der Trockenzelle angebracht werden muss, damit das Wasser durch die Schwerkraft in die Zelle fließen kann. Bei jeder Art von Zelle stehen sich immer Anode und Kathode in geringem Abstand gegenüber (meist 1,5 mm - 3 mm). Bei einer Trockenzelle sind die Elektroden oben und unten mit Löchern oder Schlitzen versehen, damit das Wasser unten durch die ganze Zelle laufen kann bzw. das Gas oben entweichen kann. Mit einer Gummidichtung in Ringform werden die Elektroden auf Abstand zueinander gehalten. Elektroden und Gummiringe bilden so das Gefäß der Trockenzelle, in der das Wasser elektrolysiert wird.

Jede Trockenzelle hat einen Wassereinlauf (unten) und einen Gasauslass (oben). Zelle und Wassertank bilden somit einen Kreislauf. Ständig läuft Wasser aus dem Tank in die Zelle und Gas, vermischt mit Wasser, in den Tank zurück. Dieser Kreislauf dient nicht nur der Versorgung mit Wasser, sondern auch der Kühlung.

Eine Zelle besteht aus einem Plattenstapel von Elektroden, die an die Bordnetzspannung des Fahrzeuges (12 oder 24 Volt) angeschlossen werden. Eine Zuführung liefert Wasser nach, während das Elektrolysegas (Knallgas, bestehend aus Wasserstoff und Sauerstoff) gemeinsam gesammelt wird [Zitat Ende].

Mit dem Gegenstand der WO 2019174659A1 ist ein Verfahren und eine Anordnung zur Herstellung von Deuterium reduziertem Wasser bekannt geworden, das dadurch gekennzeichnet ist, dass das aus einer Elektrolyse gewonnene HHO-Gas in einen Reaktor eingedüst und gezündet und in Gegenwart von einem Katalysator aus Metalloxiden bei Temperaturen von 2.800 °C bis 3.500 °C in einem Plasma zu entstehendem Reaktionswasser umgesetzt wird, wobei Luft dem Verbrennungsofen zugeführt wird, die Luft das Plasma umgibt und somit das Plasma gekühlt wird und anschließend das Plasma nach der Verbrennung als Abluft abgeführt wird.

Ein solches Verfahren geht den Weg, aus einem HHO-Gas Wasser zu gewinnen. Nachteil dieses bekannten Verfahrens ist jedoch, dass der umgekehrte Weg im Vergleich zur Erfindung gegangen wird, nämlich dass aufgezeigt wird, wie aus einem Plasma Wasser zurückgewonnen wird. Die Bildung eines Hochtemperatur-Plasmas in einem Bereich von 2.800 °C bis 3.500 °C ist unerwünscht und erhöht die Kosten eines solchen bekannten Reaktors.

Mit dem Gegenstand der US 7 384 619 B2 ist ein Verfahren und eine Vorrichtung zur Gewinnung von Wasserstoff aus Wasser oder Wasserdampf in einem Plasma bekannt geworden.

Auch bei diesem bekannten Verfahren besteht ein Nachteil, dass hohe Prozesstemperaturen für die Gewinnung eines Plasmas vorausgesetzt werden und ferner besteht die Notwendigkeit, dass für die Plasmaverarbeitung Katalysatoren eingesetzt werden, was die Herstellungskosten und den Unterhalt einer solchen Anlage erhöht.

Beide genannten Anlagen sind nicht in der Lage, als kleine transportable Reaktoren, beispielsweise zur Gewinnung von Browns-Gas und/oder Sauerstoff und Wasserstoff in Kraftfahrzeugen oder anderen mobilen Anlagen, verwendet zu werden.

Auch die Verwendung für den Allgemeingebrauch, z.B. als Heizungsanlage im Keller von Wohnhäusern, ist für solche Anlagen nicht anwendbar.

Die gleiche Kritik gilt auch für die US 9 079 772 B2, bei der Wassermoleküle vorzugsweise in Form von Wasserdampf vorhanden sind und ein in radialer Richtung (von außen nach innen) wirkender Energie-Transferreaktor vorhanden ist.

Die von dem Reaktor in radialer Richtung einwärts abgegebene Energie wird von den Wassermolekülen aufgenommen und es erfolgt eine Aufspaltung in Wasserstoff und Sauerstoff.

Nachteil dieser bekannten Vorrichtung ist ebenfalls der hohe Energieeinsatz, die hohen Prozesstemperaturen und die fehlende Anwendbarkeit für den Alltagsgebrauch.

Der Erfindung liegt deshalb die Aufgabe zugrunde, ein Verfahren und eine Vorrichtung zur Gewinnung von Browns-Gas und/oder Sauerstoff und Wasserstoff so weiterzubilden, dass eine einfach zu handhabende, relativ kostengünstig herstellbare Anlage erreicht wird, bei der es möglich ist, mit relativ kleinem Energieeinsatz eine große Ausbeute von Browns-Gas und/oder Wasserstoff zu ermöglichen.

### 2. Kurzbeschreibung der Erfindung

Bei dem Verfahren zur Erzeugung von Wasserstoff und Sauerstoff und/oder Brown's-Gas aus Wasser handelt es sich um ein physikalisches Spaltungsverfahren unter Anwendung einer Abfolge von unterschiedlichen Erregungsverfahren bei HHO mit anschließender Trennung der Gase H2 und O2.

Die Erfindung betrifft ein Verfahren zur Erzeugung von Wasserstoff / Browns-Gas aus Wasser, bei dem das Wasser einen dynamischen Prozess durchläuft und dabei verschiedenen Erregungsverfahren ausgesetzt wird. Elektrolyte oder Katalysatoren sind bei dem Verfahren nicht erforderlich, könnten aber förderlich sein.

Bei dem Verfahren wird das Wasser nach einer ersten Verfahrensvariante mit einer Einspritzdüse in einen Reaktor eingespritzt, der zu Beginn des Prozesses drucklos im Vergleich zur Umgebungsluft ist. In einer zweiten Verfahrensvariante erfolgt die Einspeisung von Wasser in den Reaktor ohne Verwendung einer Einspritzpumpe.

Bei dem Verfahren wird das Wasser in einem Kreislauf zunächst mit einer Pumpe in Zirkulation versetzt. Beim Passieren eines Reaktors wird das Wasser zunächst ionisiert, durch Permanentmagneten oder Magnetspulen ausgerichtet, mit einem Radiosignal mit einer bestimmten Frequenz in Schwingung versetzt und erreicht so einen Plasmazustand. In diesem Plasmazustand passiert das Wasser speziell geformte und angeordnete Elektroden, an denen spezifische Spannungen permanent und/oder impulsweise angesteuert anliegen, wodurch eine Teilmenge Wasserstoff und Sauerstoff abgeschieden werden. Die nicht gespaltene Fraktion des Wassers verbleibt in Zirkulation und erreicht kontinuierlich höhere Erregungszustände, wodurch der Wirkungsgrad ansteigt. Frischwasser kann permanent zugeführt werden.

Vorteil der Erfindung ist es, ein Verfahren der eingangs erwähnten Art zur Gewinnung von Wasserstoff / Brown's-Gas so auszubilden, dass es gleichzeitig möglichst kostengünstig und ökologisch verträglich zu realisieren ist. Dabei besteht der Anspruch, bei gleichem Energieeinsatz wie er bei Elektrolyseverfahren zum Einsatz kommt eine größere Volumenmenge Wasserstoffgas zu gewinnen. Das Verfahren soll in seiner Auslegung sowohl stationär als auch mobil anwendbar sein.

Wesentlicher Teil der Erfindung ist im Gegensatz zu statischen Elektrolyseverfahren die dynamische Skalierbarkeit. Durch den Eingriff in Steuerparameter wie Volumenfluss, Frequenz, Magnetstärke und Spannung lässt sich die Menge der erzeugten Gase im Betrieb dynamisch anpassen. Dies erlaubt eine dosierte bedarfsgerechte Bereitstellung spezifischer Gasmengen für Anforderungen bei mobilen Anwendungen in der Fahrdynamik oder im Prozessfluss bei industriellen Anwendungen.

Weiterhin ist es Aufgabe der Erfindung eine Vorrichtung zur Durchführung eines solchen Verfahrens bereit zu stellen. Das Verfahren hat in erster Linie den Vorteil die bekannten Nasszellen- Elektrolyseverfahren zu vermeiden, indem der bekannte statische Prozess durch einen dynamischen Prozess ersetzt wird.

Im Gegensatz zu bekannten Trockenzellen- Verfahren wird der Volumenstrom des Wassers nicht allein bei geringer Dynamik durch Metallplatten mit elektrischer Ladung geschleust, sondern in einem schnelleren hydraulischen und/oder pneumatischen Fluss teilweise mehrfach durch den Reaktor geführt.

Beim Passieren des Reaktors wird das Wasser zunächst ionisiert. Dies kann je nach Anwendung durch bestimmte Permanentmagnete und Elektromagnete, durch UV-Licht, durch Anlegen einer Gleichspannung oder Passieren eines biokeramischen Filters erfolgen.

Im nächsten Verfahrensschritt wird das Wasser mit einer Radiofrequenz innerhalb des Reaktors impulsweise erregt und wird so mindestens teilweise in einen Plasmazustand versetzt.

Im folgenden Verfahrensschritt wird das Wasser im gemischten Aggregatzustand über eine Anordnung von Elektroden geführt, die quer zur Strömungsrichtung angeordnet sind und in Strömungsrichtung mit ausreichenden Reaktionsoberflächen ausgestattet sind und die permanent und/oder impulsweise mit einer festgelegten, höheren Impuls- und/oder Gleichspannung beaufschlagt werden. Dadurch scheiden sich Wasserstoff- und Sauerstoffatome unter relativ geringer Energieeinwirkung ab.

Der bei Einspeisung erzeugte Wasserstrom oder der bei Einspritzung entstehende Wassernebel wird weiter in Zirkulation gehalten, während das gelöste Gas nach oben abgeschieden wird.

Je nach Folgeanwendungen wird das Gas als Brown-Gas durch ein oder mehrere Gaswäscher (Bubbler), Partikelfilter und Rückschlagventile der direkten Anwendung zugeführt oder in einem Gasabscheider in H2 und O2 aufgeteilt und so der Verwendung oder Speicherung zugeführt.

Das Verfahren eignet sich sowohl für Süßwasser in unterschiedlichen Qualitäten (Regenwasser, Oberflächenwasser, Brunnenwasser, Kondenswasser, destilliertes Wasser, Grauwasser aus Klärprozessen etc.), als auch für Salzwasser ohne vorherige Entsalzung.

Der Zusatz von kristallinen Katalysatoren und Elektrolyten als Beimischung im Wasser oder die Durchströmung durch einen metallischen Permanentkatalysator kann erwogen werden und kann die Reaktionsgeschwindigkeit nochmals steigern, ist aber nicht zwingend erforderlich.

Dies kann fallweise nach Abwägung des ökologischen Fußabdrucks unter Berücksichtigung aller Ressourcen (Energie wie Material) erwogen werden.

Anwendungen: das so gewonnene Gas kann ebenso wie klassisch erzeugter Wasserstoff oder Brown's Gas als Brennstoff z.B. für Schweißgeräte, Industriefeuerung, Heizanlagen u. a. eingesetzt werden. Es kann zur Abgasneutralisation in Verbrennungsmaschinen und thermischen Anlagen im Prozess oder nachgeordnet zur Abgasneutralisierung eingesetzt werden. Im Transportsektor können mit dieser Technologie Wasserstofftankstellen ohne Tanklager realisiert werden, die das Gas in bedarfsgerechten Portionen erzeugen. In der dynamischen Anwendung kann für Fahrzeuge zu Land, Wasser und der Luft Wasserstoff oder Brown's Gas nach dem momentanen Bedarf der Fahrdynamik erzeugt werden. Eine Speicherung von Gas ist im Fahrzeug nicht erforderlich. Die Umwandlung in kinetische oder elektrische Energie kann dabei sowohl durch Verbrennungsmotoren als auch durch Brennstoffzellen erfolgen.

Besonderheiten / Modifikationen beim Einsatz in Verbrennungsmotoren:
1. Im Gegensatz zum Luft-Kraftstoff-Gemisch reagiert Brown's Gas durch Implosion. Das bedeutet, dass bei Betrieb mit purem Gas ein entsprechend großer Brennraum erforderlich, ist und die Zündung um bis zu 30° (je nach Motor) vorgestellt werden muss, um den Motor durch Sog, statt durch Volumenausdehnung zu bewegen.
2. eine Alternative ist die Mischung des separierten Wasserstoff -Gases mit Wasserdunst. Dieser liefert eine Reaktionsoberfläche, die eine Dampfexpansion des Wassers ausgelöst durch die Knallgaszündung ermöglicht. Der Eintrag des Wassernebels kann wie bei anderen Verfahren, die z.B. mit einem Wasserstofftank arbeiten, per Venturidüse erfolgen. Allerdings erlaubt der steuerbare Prozess der Wasserstoff- / Brown's Gas-Erzeugung eine direkte Kopplung beider Prozesse und die bedarfsgerechte Einspritzung von Gas und Wassernebel im optimalen Mischungsverhältnis mittels einer Einspritzdüse.
3. Detaillierte Beschreibung der Erfindung Zur Lösung der gestellten Aufgabe ist die Erfindung demnach durch ein Verfahren gekennzeichnet, welches aus mehreren hintereinander geschalteten Prozessschritten besteht, wobei im ersten Prozessschritt wahlweise eine Einspritzung oder eine Einspeisung von Wasser in den Einlauf einer Reaktorzelle erfolgt, dass in einem zweiten Prozessschritt eine Ionisierung des eingetragenen Wassers mithilfe von UV-Strahlen stattfindet und hieraus ein Plasma entsteht, dass im dritten Prozessschritt eine Magnetisierung des gebildeten Plasmas mit Bildung eines Verwirbelungsstromes erfolgt, dass in einer vierten Stufe eine Resonanzerregung des so gebildeten, verwirbelten Plasmas erfolgt und dass am Ausgang der vierten Stufe ein Gaszerfall und wahlweise entweder eine Aufspaltung in Wasserstoff und Sauerstoff erfolgt oder ein Mischgas in Form eines HHO-Gases (Brown's-Gas) erfolgt.

Ist eine weitere Abtrennung des Gasgemisches aus Wasserstoff und Sauerstoff gewünscht, dann ist für diesen Fall eine fünfte Stufe vorgesehen, bei der im Bereich eines elektrischen Feldes mit einer Pulsspannung oder eine Gleichspannung eine Aufspaltung des Gasstromes in Wasserstoff und Sauerstoff erfolgt.

Bei der genannten Prozessabfolge wird es bevorzugt, wenn bereits schon beim Ausgang der vierten Stufe das HHO-Mischgas abgezapft wird, um so das gewonnene Brown's-Gas einer weiteren Verarbeitung zuzuführen.

Am Ausgang der fünften Stufe, wenn demnach in einem elektrischen Feld das Sauerstoffgas vom Wasserstoffgas getrennt wurde, können die beiden so getrennten Gasströme in einer sechsten Stufe einem Verbraucher zugeführt werden, der z.B. eine Brennstoffzelle, ein Verbrennungsmotor, eine Abgasmitigation oder ein anderer industrieller Prozess ist.

Wichtig bei den dargestellten Prozessstufen ist, dass mit relativ geringem Energieeinsatz eine hohe Prozessausbeute erfolgt, denn elektrischer Strom wird lediglich in der Ionisierungsstufe (zweite Stufe) in geringem Umfang benötigt, ferner in der dritten Stufe, um eine Magnetisierung mit der Verwirbelung des Plasmagases zu erreichen (entfällt bei Einsatz von Permanentmagneten) und ferner auch in der vierten Stufe, wo eine Resonanzerregung mithilfe einer elektrischen Spannung stattfindet.

Es handelt sich in den verschiedenen beschriebenen Stufen um Niederstromanwendungen, was mit dem Vorteil verbunden ist, dass die genannte neuartige Anlage keinen hohen Stromverbrauch hat.

In einer abgewandelten Ausführungsform ist es erfindungsgemäß vorgesehen, dass die zweite Stufe (Ionisierung) gegen die dritte Stufe ausgetauscht wird, d.h. es wird in diesem abgewandelten Ausführungsbeispiel zunächst die dritte Stufe durchlaufen, an die sich die zweite Stufe anschließt.

Wenn in der vorliegenden Beschreibung davon die Rede war, dass in der dritten Stufe eine Magnetisierung mit einer Verwirbelung stattfindet, so ist eine solche Magnetisierung mit verschiedenen Vorrichtungsmerkmalen zu verwirklichen.

In einer ersten Ausgestaltung kann es vorgesehen sein, dass die Magnetisierung vorzugsweise mithilfe von Permanentmagneten erfolgt, die gleichmäßig am Umfang einer Magnet-Ringbuchse verteilt angeordnet sind.

Statt der Verwendung von Permanentmagneten ist es selbstverständlich auch möglich, mit Strom versorgte Spulen zu verwenden, die einen gleichen Magnetisierungseffekt ausüben.

Die vierte Stufe, die auf eine Resonanzerregung ausgerichtet ist, soll vorzugsweise mit einer Frequenzerregung im Mikrowellenbereich erfolgen. Hierzu ist ein geeigneter Frequenzgenerator erforderlich, der beispielsweise im Frequenzbereich 100 bis 200 MHz arbeitet.

Bevorzugt wird hierbei ein Frequenzbereich im Bereich von 124 bis 132 MHz.

In einer anderen Ausgestaltung sind selbstverständlich auch andere Mikrowellenerreger möglich, wie z.B. eine Infraschall oder Ultraschall-Resonanzerregung.

In einer bevorzugten Ausgestaltung schließt sich an die Resonanzerregung eine fünfte Stufe mit der Erzeugung eines elektrischen Feldes an.

Versuche haben gezeigt, dass die Anordnung eines elektrischen Feldes zur Aufspaltung von Wasserstoff und Sauerstoff nicht unbedingt lösungsnotwendig ist, aber bevorzugt wird.

Geht es nur um die Gewinnung von Brown's-Gas, dann kann die fünfte Stufe mit der Erzeugung des elektrischen Feldes zur Trennung von Sauerstoff und Wasserstoff vollständig entfallen.

In einer bevorzugten Ausgestaltung wird eine Vorrichtung beschrieben, wie sie bevorzugt für die Gewinnung von Brown's-Gas und/oder Wasserstoff und Sauerstoff für die Brennstoffzuführung eines Verbrennungsmotors vorgesehen ist.

Ein solcher Verbrennungsmotor kann ein Hubkolbenmotor, ein Drehkolbenmotor oder ein anderer geeigneter Motor sein, der geeignet ist, über einen Verbrennungsvorgang eine mechanische Energie an einer Abtriebswelle (Kurbelwelle) zu erzeugen.

In einem bevorzugten Ausführungsbeispiel wird deshalb ein geschlossener Kreislauf für die Brennstoffversorgung eines Verbrennungsmotors beschrieben, bei dem in die Verbrennungsräume des Verbrennungsmotors Wasser in flüssiger Form und gleichzeitig ein aus dem Reaktor gewonnenes Wasserstoffgas eingespritzt werden.

Damit wird die Energiebilanz eines solchen Verbrennungsmotors entscheidend verbessert auch werden die Abgaswerte verbessert. Damit wird erreicht, dass auf fossile Brennstoffe, wie z.B. Benzin oder Dieseltreibstoff, verzichtet werden kann, und nur noch am Ausgang des Verbrennungsvorganges Wasserdampf erzeugt wird.

Eine solche Vorrichtung kann auch für stationäre Verbrennungsmotoren verwendet werden, wie sie als Blockheizkraftwerk in Kelleranlagen von Wohnhäusern verwendet werden.

In einer weiteren bevorzugten Ausgestaltung einer Vorrichtung wird ein geschlossener Kreislauf vorgesehen, der ausgehend von flüssigem Wasser, welches in einem Wassertank vorrätig ist, eine bestimmte Menge in die Eingangsseite einer Reaktorzelle einspritzt oder einfließen lässt und dann die vorher genannten Prozessstufen nacheinander folgend ablaufen.

In der bevorzugten Ausgestaltung besteht die Reaktorzelle aus einem druckfesten, eingangsseitig abgeschlossenen Metallgehäuse, an dessen Eingangsseite nunmehr über eine Einspritzdüse oder ein Einlassventil ein Wasserstrom einläuft und/oder ein Wasserstrahl eingespritzt wird. Danach erfolgt im Rahmen der zweiten Prozessstufe eine Ionisierung.

Mit der Ionisierung werden die Wassermoleküle ionisiert und ausgerichtet, sodass sich damit ein bestimmter orientierter Molekülverbund ergibt, der in der dritten Stufe einer Magnetisierung unterworfen wird, die vorzugsweise eine zusätzliche spiralförmige Verwirbelung erzeugt, die um die in Längsrichtung gerichtete Strömungsachse gerichtet ist.

Im Bereich dieser Magnetisierungsstufe werden die ausgerichteten Wassermoleküle in ein Plasma umgewandelt. Damit wird der Molekülstrom in eine bestimmte achsiale Richtung ausgerichtet, sodass die Energie der Wassermoleküle einen Energieeintrag erzeugt und die Bildung eines Plasmas verbessern.

Die verwendeten Magnetfeldstärken richten sich nach der Größe des Reaktors und nach der Größe des Volumenstromes des ausgerichteten Molekülstroms, welcher aus der zweiten Stufe entstammt; es können Werte im Bereich von 0,1 bis 10,0 Tesla verwendet werden.

In einer ersten Ausgestaltung ist es vorgesehen, dass die Magnetisierung mit Permanentmagneten erfolgt, d.h. es handelt sich um ein statisches Magnetfeld, während in einer zweiten, alternativen Ausführungsform vorgesehen ist, dass ein gepoltes Magnetfeld verwendet wird, welches eine gepulste Magnetisierung mithilfe von Magnetspulen erreicht.

Die Pulsfrequenz in diesem zweiten Ausführungsbeispiel liegt im Bereich zwischen 0,01 Hz bis 10 Hz. Der so in der Magnetisierungsstufe gebildete Plasmastrom ist bevorzugt ein Spiralstrom, der in achsialer Richtung des Reaktors eine bestimmte Verwirbelungsstruktur zeigt. Der so verwirbelte Plasmastrom wird nun in den Bereich einer Resonanz-Vorrichtung gebracht.

Diese Resonanz-Vorrichtung besteht bevorzugt aus mindestens zwei glockenförmigen, im gegenseitigen Abstand und isoliert voneinander angeordneten glockenförmigen Körpern, die elektrisch leitfähig sind, wobei zwischen beiden glockenförmigen Körpern eine Mikrowellenfrequenz angelegt ist, die im Bereich des o.g. Frequenzbandes liegt.

Somit wird im Zwischenraum zwischen den beiden leitfähigen glockenförmigen Körpern ein hochfrequentes Mikrowellenresonanzfeld erzeugt, welches in seiner Frequenz so abgestimmt ist, dass es mit der Frequenz der Molekülstruktur des gebildeten Plasmas übereinstimmt.

Hier soll dann die Mehrzahl der gebildeten Moleküle zerfallen oder sich zu dem Brown's-Gas "aufstrecken", d.h. es liegt ein loser Molekülverbund oder sogar schon eine Trennung der Moleküle vor.

Am Ausgang dieser vierten Stufe (Resonanzerregung) erfolgt demnach bereits schon ein Gaszerfall in ein Mischgas bestehend aus Sauerstoff und Wasserstoff oder wahlweise ein Mischgas bestehend aus dem Browns-Gas HHO.

Am Ausgang dieser vierten Stufe kann das Browns-Gas bereits schon abgezapft und einer weiteren Verarbeitung zugeführt werden.

Ist es hingegen gewünscht, dass das Mischgas aus Wasserstoff und Sauerstoff noch weiter abgetrennt wird, erfolgt die Weiterverarbeitung in der fünften Stufe im Bereich eines elektrischen Feldes.

Dieses elektrische Feld besteht aus in achsialer Richtung abwechselnd polarisiert angeordneten Kondensatorplatten, die als gerade, gelochte Scheiben ausgebildet sind und beim Durchgang durch das zwischen den Scheiben ausgebildete abwechselnd polarisierte elektrostatische Feld erfolgt ein Zerfall des Mischgases in die Einzelgase Wasserstoff und Sauerstoff.

Am Ausgang dieser fünften Stufe kann somit eine getrennte Entnahme von Sauerstoff und Wasserstoff erfolgen und wahlweise eines oder beide Gase einem Verbraucher zugeführt werden, wie z.B. eine Brennstoffzelle, einem Verbrennungsmotor, einer Abgasmitigation, oder einem anderen industriellen Prozess, insbesondere auch einem Blockheizkraftwerk.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

### 4. Detaillierte Zeichnungsbeschreibung

Im Folgenden wird die Erfindung anhand von lediglich mehreren Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: Schematisiert ein erstes Ausführungsbeispiel für eine Vorrichtung nach der Erfindung in der Anwendung an einem Verbrennungsmotor
Figur 2: Schematisiert die in Figur 1 dargestellte Reaktorzelle im Schnitt
Figur 3: Ein Schnitt gemäß der Linie III-III in Figur 2
Figur 4: Ein Schnitt gemäß der Linie IV-IV in Figur 2
Figur 5: Ein Schnitt gemäß der Linie V-V in Figur 2
Figur 6: Ein Schnitt gemäß der Linie VI-VI in Figur 2
Figur 7: Eine Frontansicht eines Schwingungskörpers, der im bevorzugten Ausführungsbeispiel als Glockenkörper ausbildet ist
Figur 8: Ein Schnitt gemäß der Linie VIII-VIII in Figur 7
Figur 9: Schnitt durch das eingangsseitige Gehäuse im Reaktionsgefäß mit Darstellung der Verfahrensstufen 1, 2 und 3
Figur 10: Frontansicht des Gehäusekörpers nach Figur 9 von der Eingangsseite her
Figur 11: Eine Seitenansicht einer Magnet-Ringbuchse gemäß Figur 9
Figur 12: Eine vergrößerte Darstellung einer Magnet-Ringbuchse ohne Einbau von Permanentmagneten
Figur 13: Die Magnet-Ringbuchse in perspektivischer Darstellung
Figur 14: Schnitt durch die Magnet-Ringbuchse gemäß der Linie A-A in Figur 12
Figur 15: Ansicht einer weiteren Ausführungsform im Vergleich zur Figur 5
Figur 16: Schnitt durch die Ausführung nach Figur 15
Figur 17: Schematisiert ein Verfahrensablauf für die Gewinnung von Wasserstoff und Sauerstoff oder Brown's-Gas
Figur 18: Schematisiert die in Figur 1 dargestellte Reaktorzelle im Schnitt in vertikaler Anordnung mit alternativer Platzierung der Einspritzdüse und Gas-Separiereinheit.

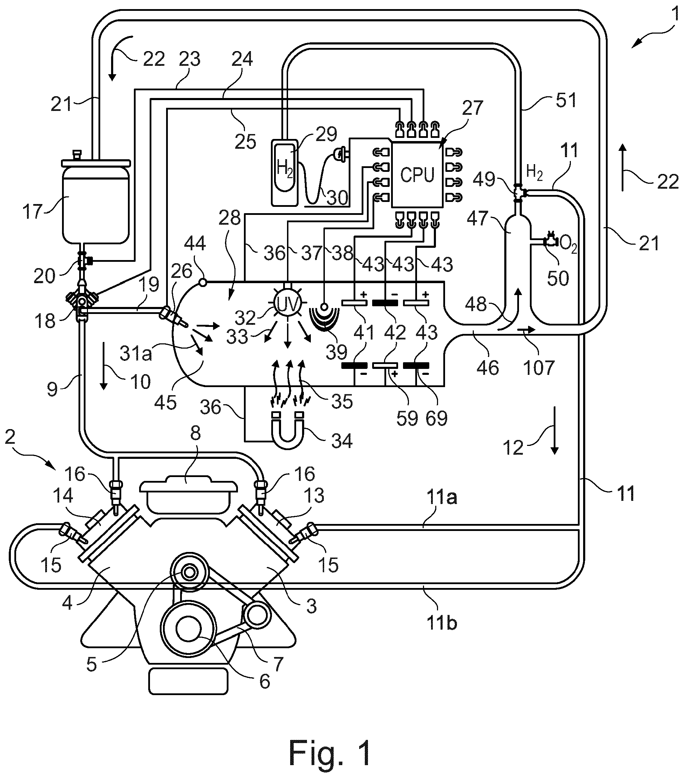

In Figur 1 ist beispielhaft ein Kreisprozess des erfindungsgemäßen Verfahrens dargestellt, wobei beispielhaft eine Vorrichtung 1 zur Gasgewinnung dargestellt ist, die Sauerstoff- und Wasserstoffgas erzeugt, wobei das Wasserstoffgas bevorzugt einem Verbrennungsmotor 2 zugeführt wird, der im gezeigten Ausführungsbeispiel als Hubkolbenmotor ausgebildet ist. Hierauf ist die Erfindung nicht beschränkt. Es kann jeder beliebige Gasverbraucher verwendet werden, wie in der eingangs genannten Beschreibung erwähnt wurde. Statt eines Verbrennungsmotors 2 kann demnach auch ein Drehkolbenmotor oder ein anderer Verbrennungsmotor verwendet werden, beispielsweise Gasmotoren, die für Biogasanlagen ausgelegt wurden. Statt des Verbrennungsmotors 2 kann auch eine Brennstoffzelle verwendet werden. Am Beispiel des hier dargestellten Verbrennungsmotors 2 ist gezeigt, dass dieser über eine Anzahl von Zylinderreihen 3, 4 in V-Form verfügt, wobei die Ventile in den Verbrennungsräumen durch eine Nockenwelle 5 angesteuert werden, die über einen Antriebsriemen 7 von einer Kurbelwelle 6 angetrieben ist.

Im oberen Bereich erfolgt - wie an sich bekannt - eine Luftansaugung 8.

Im gezeigten Ausführungsbeispiel besteht die Vorrichtung 1 zur Gasgewinnung zum einen Teil aus einer Einspritzvorrichtung, mit der aus einem Wassertank 17 über ein Speiseventil 20 und eine Einspritzpumpe 18 das Wasser unter Druck in Pfeilrichtung 10 in die beiden parallelen Anschlussleitungen 16 am Zylinderkopf 13, 14 eingespritzt wird.

Die Einspritzung von (flüssigem) Wasser in den Verbrennungsraum des Hubkolbenmotors hat den Vorteil einer besseren Energiebilanz, da der erzeugte Wassernebel durch das eingeleitete Wasserstoffgas, welches über die Anschlüsse 15 zugeführt wird, explodiert, dadurch explosionsartig expandiert und somit die Kolben in den Hubzylindern antreibt.

Das aus dem Prozess zurückgeführte Wasserstoffgas wird über eine Speiseleitung 11 und über die Speiseleitungsanschlüsse 11a und 11b parallel zu den Anschlüssen 15 und 16 in den Verbrennungsraum eingespritzt.

Im Bereich des Anschlusses 15 ist für die Einspeisung des Wasserstoffgases über die Anschlüsse 11a, 11b bevorzugt eine durch den Motortakt gesteuerte Einspritzung des Brenngases in den Verbrennungsraum vorhanden.

Demnach wird das Wasserstoffgas in Pfeilrichtung 12 von der Speiseleitung 11 unter einem bestimmten Überdruck in die Speiseleitungen 11a, 11b befördert und dort taktweise in den Verbrennungsraum eingespritzt.

In einer ersten Ausführungsform der vorliegenden Erfindung ist vorgesehen, dass von dem Wassertank 17 über das Speiseventil 20 und eine daran angeordnete Einspritzpumpe 18 (flüssiges) Wasser über eine Einspritzdüse, die in der Abzweigleitung 19 sitzt, in den Eingangsbereich der Reaktorzelle 28 eingespritzt wird.

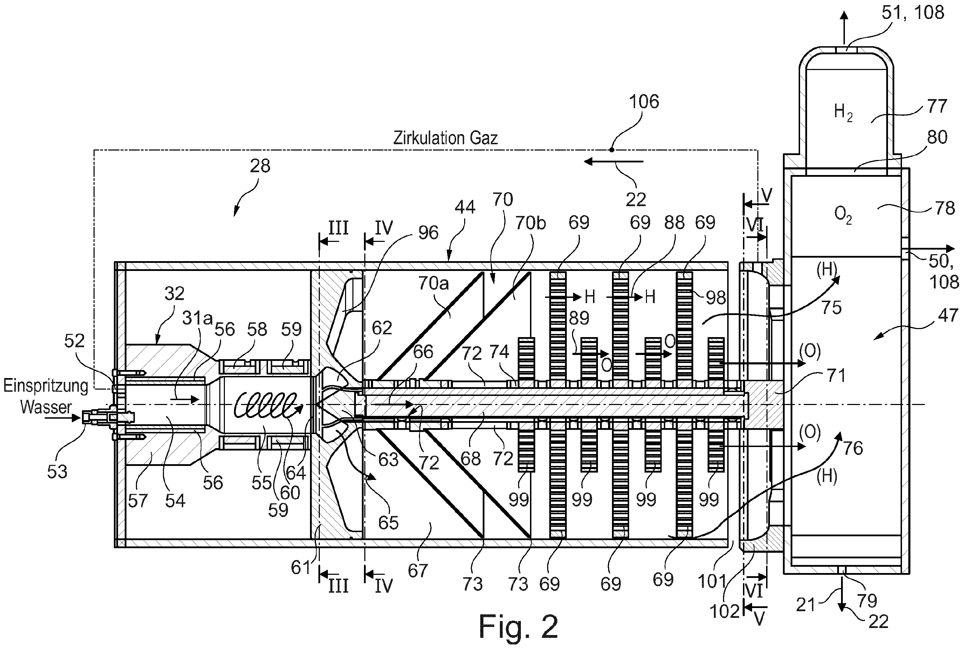

In einer anderen Ausgestaltung, die insbesondere in Figur 2 mit einer dort angegebenen Zirkulationsleitung 106 dargestellt ist, ist es vorgesehen, dass in Kombination mit der Hochdruck-Wassereinspritzung ein zurückgeführtes Mischgas bestehend aus den Wasserstoff- und Sauerstoffkomponenten in den Bereich der Einspritzdüse 26 eingeführt wird.

In einer dritten Ausgestaltung, die zeichnerisch nicht dargestellt ist, kann es ausreichen, auf die Einspritzung von Wasser zu verzichten und die Zerstäubung von Wasser durch eine Piezo-Düse zu erreichen, die in Verbindung mit dem zurückgeführten Gas ebenfalls zu dem gewünschten Wassernebel führt, der von der Einspritzeinrichtung 31 eingangsseitig in das Reaktorgefäß 44 eingespritzt wird.

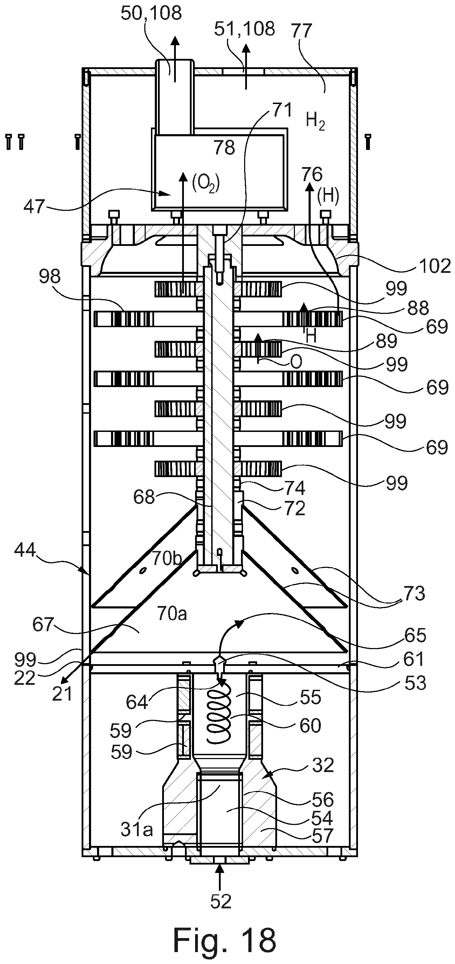

Eine vierte Ausgestaltung, wie in Fig. 18 dargestellt zeigt eine vertikale Auslegung des Reaktors, wobei die Einspritzdüse direkt am Eingang des Innenraumes der Verwirbelkammer 62 angeordnet ist und das zuvor ionisierte und magnetisierte noch flüssige Wasser direkt in die Resonanz-Vorrichtung vernebelt einführt, wobei sich der Nebel spontan in den Plasmazustand begibt.

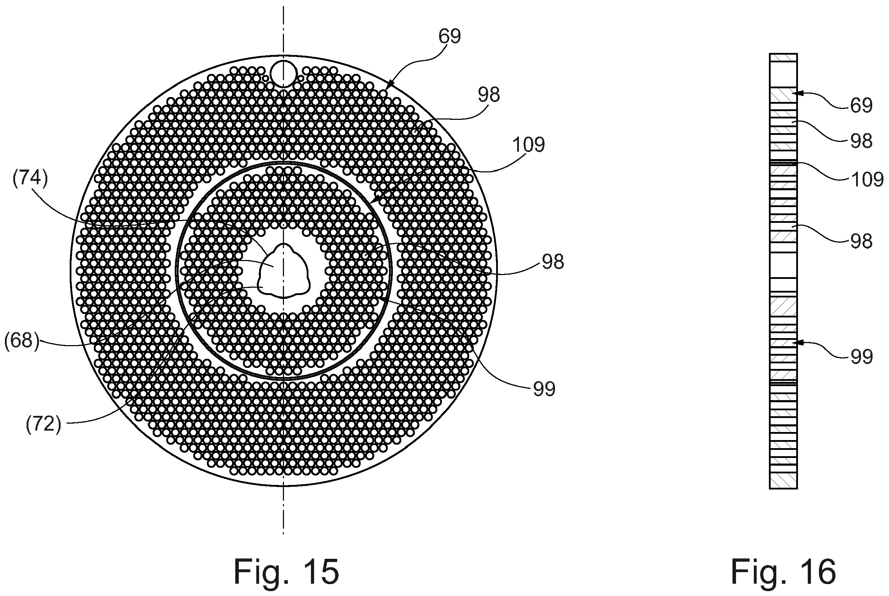

Die Einspritzeinrichtung 31 ist somit in den Innenraum 45 der Reaktorzelle 28 gerichtet und es erfolgt nun eine stufenweise Verarbeitung des so vorbereiteten Wasserstromes und/oder Wassernebels, wie es in Figur 15 in dem schematisierten Prozessablauf dargestellt ist.

Der Wassernebel gelangt zunächst in den Bereich einer Ionisierungsstufe, die bevorzugt als UV-Bestrahlung 32 ausgebildet ist und die einen ringfömigen, radial von außen nach innen gerichteten UV-Lichtstrom 33 erzeugt, welcher den Wassernebel durchsetzt und durchstrahlt und so zu einer anfänglichen Ausrichtung der dipolartigen Wassermoleküle führen.

Damit werden auch gleichzeitig die Wassermoleküle ionisiert, das bedeutet, dass die Wassermoleküle leitfähig werden und sich in der nachfolgenden dritten Stufe der dort angeordneten Magnetisierung im Reaktionsraum 55 leichter unterwerfen.

Die Magnetisierung erfolgt - wie schematisiert dargestellt - durch eine Magnetisierungsvorrichtung 34, die ein geeignetes Magnetfeld 35 im Reaktionsraum erzeugt und somit auch den konditionierten Wassernebel durchströmt.

Im Bereich der dritten Stufe (im Reaktionsraum 55) erfolgt eine spiralförmige Verwirbelung des so gebildeten Plasmas als Spiral-Strömung 60, die in achsialer Richtung in den Bereich einer Resonanzerregung 70 geleitet wird, welche aus einer Anzahl von Schwingungskörpern besteht, die in der vierten Stufe angeordnet sind.

Im Anschluss an die vierte Stufe mit der Resonanzerregung erfolgt bereits schon jetzt ein Gaszerfall in die Gaskomponenten Sauerstoff und Wasserstoff und an dieser Stelle könnte bereits schon ein Mischgas als Brown's-Gas HHO abgezapft werden.

Sollte jedoch die Sauerstoffkomponente von der Wasserstoffkomponente getrennt werden, ist gemäß der schematisierten Darstellung in Figur 1 vorgesehen, dass der Gasstrom durch eine Anzahl von gegensätzlich polarisierten Kondensatorplatten hindurchläuft, wodurch gegensätzlich polarisierte Kondensatorfelder 40, 41, 42 gebildet werden, die zu einer Aufspaltung des Gases in Sauerstoff und Wasserstoff führen.

Am Ausgang des Reaktorgefäßes 44, im Bereich des Auslasses 46, können somit räumlich getrennte Gasströme in den Pfeilrichtungen 48 entnommen werden, wobei das leichtere Wasserstoffgas nach oben in den Gasabscheider 47 strömt und über ein Entnahmeventil 49 entnommen werden kann, wo es in eine Speiseleitung 51 eingeleitet wird. Das schwerere Sauerstoffgas kann über ein weiteres Entnahmeventil 50 entnommen werden und einer weiteren Verarbeitung zugeführt werden kann.

Bei der Pfeilrichtung 48 erfolgt auch eine Aufspaltung mit einer Rückführung von eventuell angefallenem Kondenswasser, welches über die Rücklaufleitung 21 in Pfeilrichtung 22 wieder dem Wassergefäß 17 zugeführt wird.

Zur elektrischen Ansteuerung der Komponenten wird bevorzugt ein Steuerrechner 27 verwendet, der eine Anzahl von Steuerleitungen 23, 24; 36-38; 43 aufweist. Über die Signalleitung 23 wird das Speiseventil 20 angesteuert und über die Steuerleitung 24 die Einspritzpumpe 18. Über die Steuerleitung 25 wird die Einspritzdüse 26 angesteuert.

Es ist noch beispielhaft dargestellt, dass mit dem gewonnenen Wasserstoff zusätzlich eine Brennstoffzelle 29 mit Energie versorgt werden kann, die ihrerseits Strom erzeugt, der über die Stromversorgung 30 einerseits den Steuerrechner 27 und andererseits alle weiteren Komponenten der Reaktorzelle 28 mit Strom versorgt.

In einer anderen Ausgestaltung kann die Brennstoffzelle 29 auch entfallen und stattdessen eine externe Stromversorgung vorgesehen werden.

Bei Verwendung einer Brennstoffzelle 29 kann sogar ein bezüglich der Stromzuführung autarker Betrieb der gesamten Vorrichtung 1 zur Gasgewinnung erreicht werden.

Es ist lediglich beispielhaft dargestellt, dass weitere Steuerleitungen 36, 37, 38 vorhanden sind, welche die einzelnen elektrischen Komponenten ansteuern, wie es in dem schematisierten Ausführungsbespiel nach Figur 1 dargestellt ist.

Die Steuerleitung 36 dient beispielsweise zur Ansteuerung der Magnet-Vorrichtung 34, wenn diese aus elektrisch ansteuerbaren Spulen besteht. Die Steuerleitung 37 dient zur Ansteuerung der UV-Bestrahlung 32, die Steuerleitung 38 zur Ansteuerung der Resonanz-Vorrichtung 39 bestehend aus den Kathodenscheiben 69, den Anodenscheiben 99.

Anhand der Figur 2 wird nun der beispielhafte Aufbau einer solchen Reaktorzelle 28 näher dargestellt.

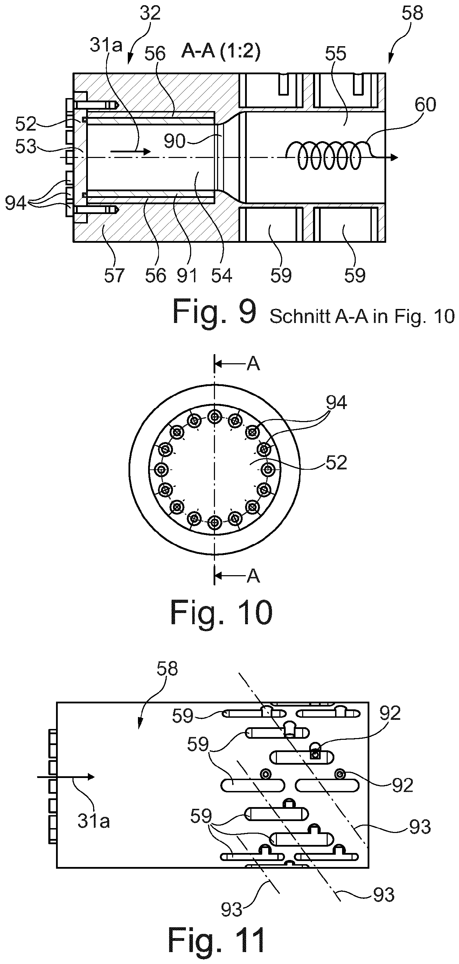

Die Einspritzung erfolgt im Bereich eines stirnseitigen Deckels 52, der das Reaktorgefäß 44 von der Stirnseite druckdicht abschließt. Im Deckel 52 ist eine Düsenanordnung 53 angeordnet, die einerseits aus der Einspritzdüse 26 und andererseits aus einer Düse für die Einführung des rückgeführten Gases über die Zirkulationsleitung 106 besteht. Die Figur 10 zeigt die Stirnansicht auf den Deckel 52 mit den Verschlussschrauben 94 für den stirnseitigen Verschluss der Reaktorzelle 28.

Alternativ (Figur 18) kann die Einspritzung direkt in die Verwirbelungskammer 62 erfolgen. Dabei ist die Einspritzdüse 53 in der Trennwand 61 zwischen Magnetisierungsstufe 55 und Reaktionskammer 67 angeordnet. Hierbei liegt der Druck bereits am Deckel 52 an. In diesem Falle wird das flüssige Wasser im Reaktionsraum (für 32) einer Ionisierung unterworfen und im Reaktionsraum (für 34) erfolgt eine Magnetisierung unter Druck bei einer gleichzeitigen Ionisierung und Magnetisierung. In diesem Zustand erfolgt eine Zerstäubung in der Reaktionskammer, wodurch der Wassernebel in den Plasmazustand übergeht.

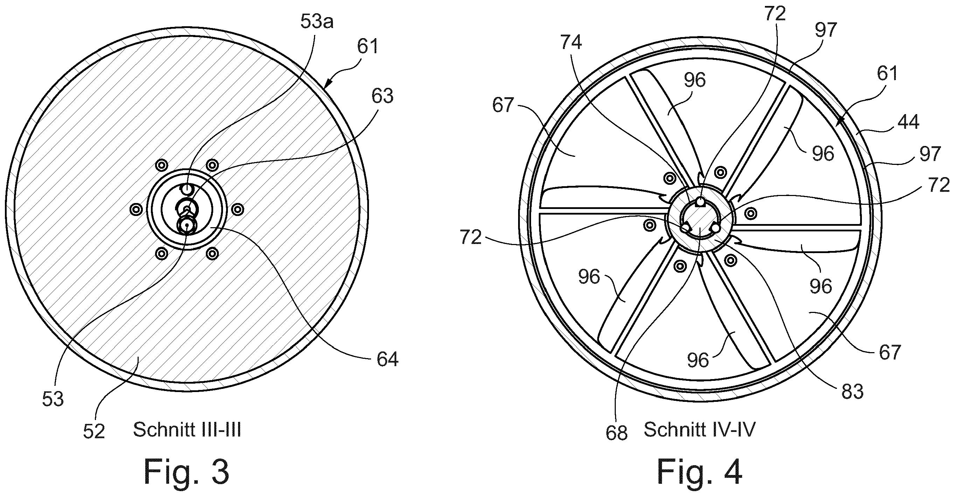

Gemäß Figur 2 ist am Ausgang der Magnetisierungsstufe eine Trennwand 61 angeordnet, die in Figur 3 im Schnitt dargestellt ist. Dort ist erkennbar, dass die Trennwand selbst gasundurchlässig ist und lediglich in einem inneren Ringraum 64 eine Gasströmung erfolgt, wobei mit dem Bezugszeichen 53 die eingangsseitige Einspritzdüse 26 dargestellt ist und mit 53a die eingangsseitige Gasrückführung.

Der so gebildete Wassernebel wird in den Reaktionsraum 54 eingeblasen und strömt in achsialer Richtung (Pfeilrichtung 31a) durch eine UV-Bestrahlungsvorrichtung 32, die im gezeigten Ausführungsbeispiel aus einer LED-Kette 56 besteht, die ringsum laufend im Wandbereich einer transparenten Büchse 91 angeordnet ist. Dies ist in Figur 9 dargestellt.

Die transparente Büchse 31, an deren Umfang die LED-Kette 56 angeordnet ist, ist somit abgedichtet im Gehäuse 57 eingepasst.

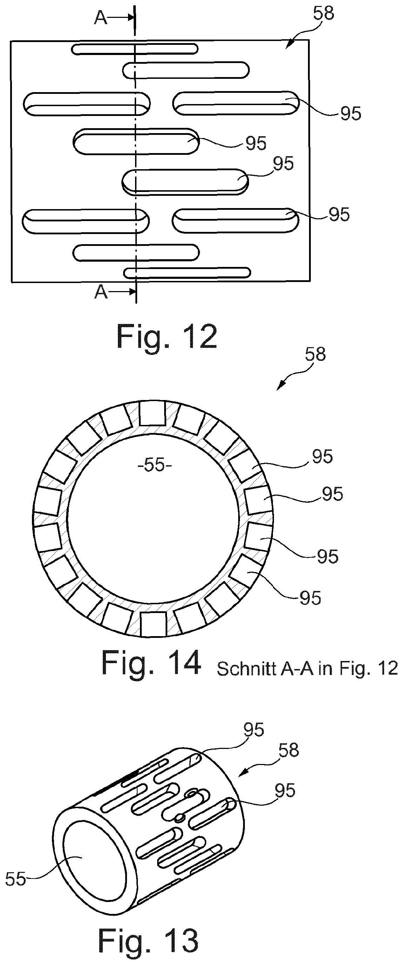

Der durch die UV-Bestrahlung ionisierte Wassernebel wird in Pfeilrichtung 31a in den nachfolgend angeordneten Reaktionsraum 54 eingeschleust, wo er durch mithilfe einer Magnetisier-Vorrichtung 34 in eine in Längsrichtung gerichtete Spiral-Strömung 60 umgewandelt wird. Die Magnetisier-Vorrichtung 34 ist in den Figuren 2, 10, 11 sowie in den Figuren 12 bis 14 dargestellt. Sie besteht im Wesentlichen aus einer Magnet-Ringbuchse 58, in deren Mantelfläche eine Anzahl von Permanentmagneten 59 am Umfang gleichmässig verteilt angeordnet sind, die stufenförmig zueinander versetzt auf einer Spirallinie am Mantel des Gehäuses der Magnet-Ringbuchse 58 angeordnet sind, wie dies beispielhaft in Figur 11 dargestellt ist. Die Mittenlinie durch die in Umfangsrichtung angeordneten Permanentmagnete 59 ist mit der jeweiligen Schräglinie 93 bezeichnet, sodass sich entsprechend der parallelen Schräglinien 93 eine Spiral-Strömung 60 gemäß Figur 9 ergibt.

Durch die beschriebene Magnetisierung erfolgt eine Ausrichtung der Wassermoleküle, wobei die Wasserstoffmoleküle im Vergleich zu den im Vergleich langsameren Sauerstoffmolekülen in Strömungsrichtung (axiale Richtung der Reaktorzelle 28) vorausfliegen.

Die Ionisierung wirkt auch in Form einer Schwingungsbeeinflussung auf den Wassernebel ebenso wie die nachgeschaltete Magnetisier-Vorrichtung 34. Dadurch erfolgt die Einleitung eines erhöhten Erregungsniveaus auf die Wassermoleküle, was zu einer Plasmabildung und nachfolgender Aufspaltung führt.

Das bereits schon durch die beiden Stufen (UV-Bestrahlungsvorrichtung 32 und Magnetisier-Vorrichtung 34) konditionierte Gas wird demzufolge durch den Ringraum 64 in achsialer Richtung nach rechts strömen und gelangt in den Einfluss einer daran angeschlossenen Strömungsleitvorrichtung 61, die am besten in Figur 4 dargestellt ist und die einen Schnitt gemäß der Linie IV-IV in Figur 2 darstellt.

Die Strömungsleitvorrichtung 61 besteht aus einer Anzahl von gleichmäßig am Umfang verteilt angeordneten schräg gerichteten Leitflächen 96, die zwischen sich eine Reaktionskammer 67 bilden, durch welche das Gas hindurchströmt.

Die Strömungsleitvorrichtung 61 bildet gleichzeitig auch die elektrisch isolierte Lageraufnahme für die Anodenwelle 68, die mithilfe von radialen, gleichmässig am Umfang angeordneten und über den Umfang der Anodenwelle 68 hinausstehenden isolierenden Rundstäben 72 elektrisch isoliert von der Buchse 83 der Strömungsleitvorrichtung 61 getrennt ist.

Das konditionierte Gas strömt demnach durch den schmalen Ringspalt 74 in achsialer Richtung weiter und erhält an den schräg gerichteten Leitflächen 96 zusätzlich noch in eine spiralförmige Verwirbelung, wie sie bereits schon anfänglich mit dem Bezugszeichen 60 (Spiral-Strömung) bezeichnet wurde.

Rings um die Anodenwelle 68 herum strömt die Spiral-Strömung des Plasmagases, das in Pfeilrichtung 66 weiter fließt, wobei ein im vorderen Bereich der Anodenwelle angeordneter Spitzwinkel 63 für die Einleitung der Spiral-Strömung 60 in die Verwirblerkammer 62 sorgt.

Somit wird erkennbar, dass in der gesamten Reaktionskammer 67 eine spiralförmig wirbelnde Plasma-Strömung vorhanden ist.

Gemäß Figur 2 gelangt nun der spiralförmig strömende Plasma-Strom in den Bereich einer Resonanz-Vorrichtung 70, die aus zwei achsial hintereinander angeordneten, vorzugsweise gleich großen glockenförmigen Schwingungskörpern besteht, die als Oszillator arbeiten.

Jeder der beiden Schwingungskörper wird bevorzugt mit einer Mikrowellenfrequenz in einem Frequenzband erregt, welches der Resonanzfrequenz der Wassermoleküle entspricht. Diese Resonanzfrequenz liegt im MHz-Bereich, wie in der allgemeinen Beschreibung angegeben.

In einer anderen Ausgestaltung kann es vorgesehen sein, dass die Schwingungserregung mit einer zum Wassermolekül komplementären Frequenz erfolgt, was bedeutet, dass eine solche Frequenz verwendet wird, die im Infraschall- und/oder Ultraschall-Bereich liegt und dadurch die erregten Wassermoleküle in mechanischer Weise zerschmettert oder zerteilt.

Es ist auch möglich, eine Kombination zwischen einer Mikrowellenerregung und einer Infra- und/oder Ultraschall-Erregung vorzusehen.

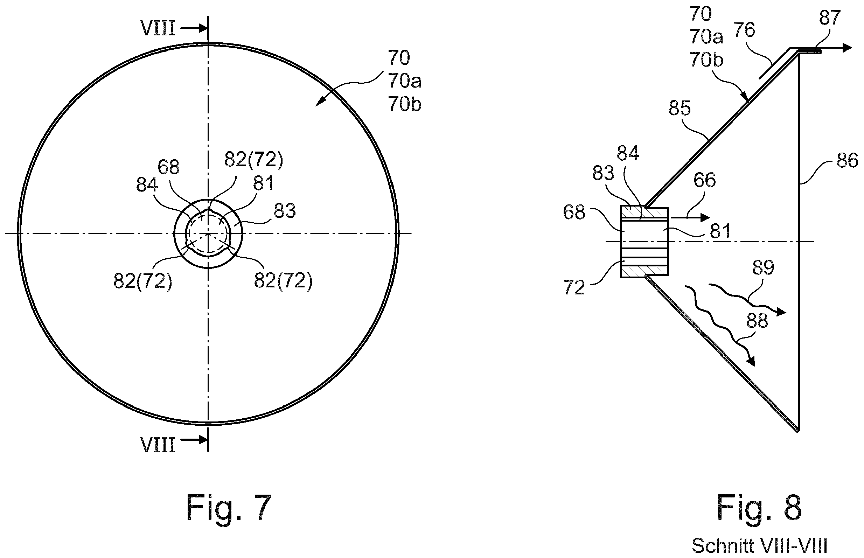

Im Bereich der beiden glockenförmigen Schwingungskörper 70a, 70b, wie sie gleichartig in den Figuren 7, 8 dargestellt sind, strömt das spiralförmige Gas zunächst über den Ringspalt 84 in der Buchse 83 als Spiral-Strom in Pfeilrichtung 66 nach vorne, wobei gleichzeitig dargestellt ist, dass die Anodenwelle elektrisch mithilfe von elektrisch-isolierenden Rundstäben 72 von der Buchse 83 isoliert ist.

Die Ausrichtung der beiden glockenförmigen Schwingungskörper 70a, 70b, richtet sich nach der Anordnung der Einspritzdüse 53. Bei Anbringung im Deckel 52 werden die Schwingungskörper mantelseitig mit dem Plasma umströmt, bei Direkteinspritzung in die Wirbelkammer 62 werden die Schwingungskörper in umgekehrter Richtung montiert (Fig. 18) und der Wassernebel wird auf die Konus-Innenseite gesprüht, wodurch es zur einer Erregungsreaktion kommt. Bei dieser Anordnung erhalten die Schwingungskörper Durchtrittsöffnungen für den erregten Gasstrom.

Bei Bedarf können neben dem Ringspalt 84 noch weitere Durchströmöffnungen vorgesehen werden.

Die Figur 8 zeigt nun schematisiert, dass sich das Gas in Pfeilrichtung 88 in radialer Richtung als Wasserstoffströmung ausbreitet, während sich die Sauerstoffströmung 89 in einem radial innen liegenden Bereich konzentriert.

Somit erfolgt im Bereich der konusförmigen, glockenförmigen Schwingungskörper 70a, 70b eine Aufspaltung in die beiden Gasströme 88 und 89.

Am Ausgang der Konusöffnung 96 wird demnach ein Mischgasstrom auf verschiedenen Ebenen entnommen und gleichzeitig fließt ein weiterer Gasanteil in Pfeilrichtung 46 über die jeweils randseitig angeordnete Lasche 87, die einen Ringspalt in Bezug zur Innenwandung des Gehäuses 44 bildet.

In einer anderen, hier nicht zeichnerisch dargestellten Variante kann die Lasche 87 und der dadurch gebildete radial außenliegende Durchströmspalt 73 auch entfallen.

Die Trennung der radial inneren Gasströme 88, 89 wird durch die unterschiedliche Aufladung der Gasmoleküle erreicht, während der im Umfangsbereich außen strömende Gasstrom (Pfeilrichtung 76) am Durchströmspalt 73 aus verschiedenen Mischgasanteilen besteht.

Wie bereits schon eingangs erwähnt, strömt ein Teil des Gases über den Außenumfang der elektrisch positiv aufgeladenen Anodenwelle 68. Dies ist in Figur 7 dargestellt, wo erkennbar ist, dass zwischen den Rundstäben 72 Ausnehmungen 82 vorhanden sind, durch welche das Gas entlang der Oberfläche der positiv geladenen Anodenwelle 68 strömen kann.

Nach dem Durchlaufen der Resonanz-Vorrichtung 70 erfolgt eine weitere Aufspaltung der Gasströme in Sauerstoff- und Wasserstoffgas mithilfe von gegensätzlich geladenen elektrisch leitfähigen Scheiben, nämlich den Kathodenscheiden 69, die einen größeren Umfang aufweisen und den, einen kleineren Durchmesser aufweisenden Anodenscheiben 99.

Im Einzelnen bedeutet dies, dass die elektrisch leitfähigen Anodenscheiben 99 elektrisch leitfähig mit dem Außenumfang der elektrisch leitfähigen Anodenwelle 68 verbunden sind, während die Kathodenscheiben 69 elektrisch isoliert von der Anodenwelle und den Anodenscheiben 99 sind, wobei die Kathodenscheiben über nicht näher dargestellte Anschlussleitungen mit einer permanenten Gleichspannung oder einer gepulsten Gleichspannung beaufschlagt sind, sodass sich ein ausreichendes Spannungsgefälle zwischen der Spannung an den Kathodenscheiben 69 und der Spannung an der Anodenwelle 68 und den leitfähig damit verbundenen Anodenscheiben 99 ergibt.

In einer ersten Ausgestaltung ist es vorgesehen, dass lediglich eine Spannungsdifferenz im Bereich von 5 bis 20 Volt zwischen den genannten Anoden- und Kathodenscheiben 69, 99 besteht, während in einer weiteren bevorzugten Ausgestaltung zur Erzeugung eines erhöhten Gasvolumens eine Differenzspannung im Bereich von 1 kV zwischen den Teilen 69 und 99 vorgesehen ist.

Eine solche Differenzspannung kann z.B. durch einen bekannten elektrischen Weidezaunapparat erzeugt werden, wie er in der Viehhaltung zur Umzäunung von Viehweiden verwendet wird.

Demnach kann der hier verwendete Pulsgenerator mit der gleichen oder modfizierten Pulsstärke und der gleichen oder modfizierten Spannungsdifferenz wie der bekannte Weidezaunapparat verwendet werden.

In einer anderen Ausführung kann es vorgesehen sein, dass die Anoden- und Kathodenplatten 69, 99 nicht nur permanent oder gepulst mit Gleichstrom beaufschlagt werden, sondern auch individuell dosiert, z.B. mit Spannungen im Bereich von 4, 8, 12V oder 60, 120, 60V in beliebiger Abfolge, sowie Impulsfolge- und -form.

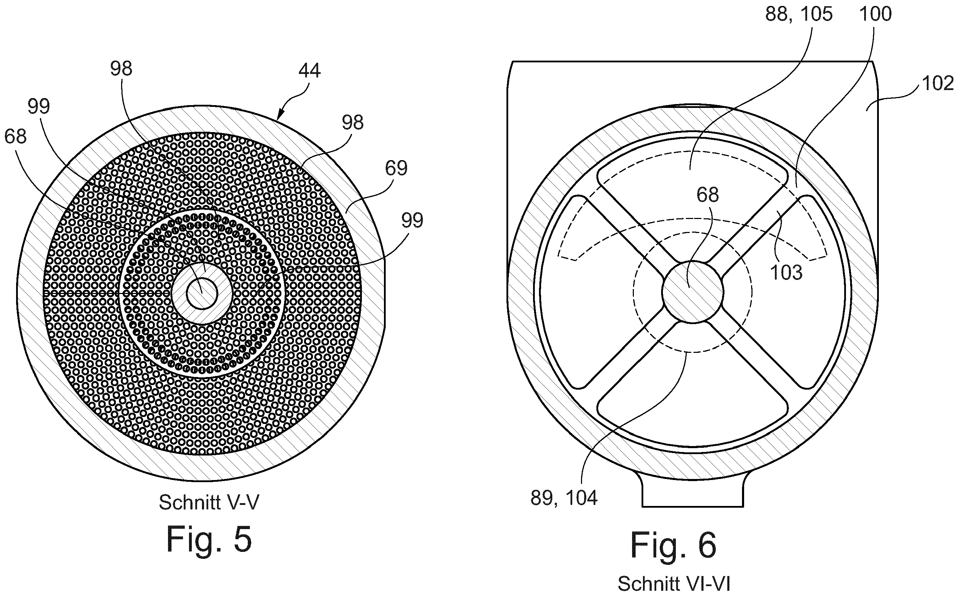

Während die glockenförmigen Resonanzkörper 70a und 70b der Resonanz-Vorrichtung 70 radial auswärts in Richtung zur Gehäuseinnenwandung optionale Durchströmspalten 73 bilden, sind derartige Durchströmspalten 73 bei den nachgeschalteten Anoden- und Kathodenscheiben 69, 99 nicht mehr notwendig, weil diese eine Vielzahl von Lochungen für den Gasdurchgang aufweisen, wie dies beispielsweise in Figur 5 dargestellt ist.

Die Figur 5 zeigt eine Draufsicht auf die bevorzugt in einer vertikalen Ebene ineinander angeordneten Anoden- und Kathodenscheiben 69, 99, wobei jede der Scheiben eine Vielzahl von Lochbohrungen 98 aufweist, durch welche das Gas hindurchströmt.

Aus Figur 5 ergibt sich auch die elektrisch leitfähige Verbindung der Anodenscheibe 99 auf dem Außenumfang der gleichsinnig aufgeladenen Anodenwelle 68.

Aus Figur 2 ist erkennbar, dass es am Ausgang der Resonanz-Vorrichtung 70 bereits schon zu einer wesentlichen Aufspaltung der Gasströme kommt, die Wasserstoffströmung 88 im radial äußeren Bereich der jeweiligen Kathodenscheibe 69 stattfindet, während der Sauerstoffanteil im radial inneren Bereich der Kathodenscheibe 69 und im radial äußeren Bereich der Anodenscheibe 99 stattfindet.

Es ist nicht lösungsnotwendig, dass die Lochbohrungen 98 im Bereich der Kathodenscheibe 69 und der Anodenscheiben 99 gleichdimensioniert sind. In einer anderen bevorzugten Ausgestaltung kann es vorgesehen sein, dass die Kathodenscheibe im radial äußeren Bereich mit kleineren Bohrungsdurchmessern gelocht ist und im radial inneren Bereich größere Durchströmfenster aufweist.

Die Anodenscheibe 99 ist davon unbeeinflusst und weist die vorher genannten Lochbohrungen 98 auf.

Die Figuren 15 und 16 zeigen eine gegenüber der Figur 5 abgewandelte Ausführungsform, bei der die gleichen Teile mit den gleichen Bezugszeichen versehen sind. Die in Klammern gesetzten Bezugszeichen zeigen, an welchen Stellen die in Figur 5 eingezeichneten Teile positioniert sind.

Anstelle und/oder wahlweise wird die in Figur 2 dargestellte Abfolge von Anodenscheiben 99 und Kathoden 69 durch eine in Figur 15 und 16 dargestellte "Kanode" ersetzt. Eine solche scheibenförmige "Kanode" kann entweder als singuläres scheibenförmiges Teil vorhanden sein oder es ist eine Hintereinander-Anordnung derartiger zusammengesetzter Scheiben vorhanden, wie es in Figur 2 anhand der Anoden- und Kathodenscheiben 66, 99 dargestellt ist.

Dabei werden die mit den Lochbohrungen 98 versehenen Anoden- und Kathodenscheiben 69, 99 in bevorzugt einer, bevorzugt vertikalen Ebene ineinander gefügt und können so den Gasstrom noch besser kanalisieren und in der Entnahmeeinheit abgreifen und obendrein kompakter bauen.

Dabei wird die Kathodenspannung an der äußeren Sektion der Kathodenscheibe 69 angelegt und die Anodenspannung an der inneren Sektion der Anodenscheibe 99. Die gelochten oder geschlitzten Scheiben 69, 99 bestehen weiterhin aus Edelstahl, oder anderen leitfähigen und oxidationsresistenten Metallen und werden in radialer Richtung durch einen in sich geschlossenen Isolierring 109, bevorzugt aus einem Keramikwerkstoff, elektrisch getrennt

Der besseren zeichnerischen Verdeutlichung wegen ist in Figur 2 das Auslassende des Reaktorgefäßes 44 mit einem (in Wirklichkeit nicht vorhandenen) Trennspalt dargestellt, der in der Praxis eine Dichtfläche 101 in Richtung zu einem sich abdichtend daran anschließenden Deckel 102 bildet, in welchem ein Isolierblock 71 für die einseitige elektrisch isolierte Lagerung der elektrisch aufgeladenen Anodenwelle angeordnet ist.

In diesem Deckel 102 sind eine Anzahl von Durchlassöffnungen vorgesehen, wobei erkennbar ist, dass das Wasserstoffgas in Pfeilrichtung 75 radial auswärts in einen daran angeschlossenen Gasabscheider 47 strömt, während das Sauerstoffgas sich unter dem Wasserstoffgas ansammelt und damit in getrennten Kammern des Gasabscheiders 47 entnommen werden kann.

Der Wasserstoff sammelt sich daher im oben angeordneten Wasserstoffspeicher 77, während der Sauerstoff sich im darunter angeordneten Sauerstoffspeicher 78 ansammelt.

Der Sauerstoff kann dort über ein Entnahmeventil 50 entnommen werden, während der Wasserstoff im Wasserstoffspeicher 77 über ein Entnahmeventil und eine dort angeordnete Speiseleitung 51 entnommen werden kann.

Der Prozess der Aufteilung der Gasströme in eine Wasserstoff- und Sauerstoffströmung 88, 89 kann noch verbessert werden, in dem im Bereich zwischen den beiden Gasspeichern 77, 78 eine semi-permeable Membran 80 angeordnet wird, welche die unterschiedlich großen Gasmoleküle voneinander trennt.

Es können weitere elektrische Leiteinrichtungen vorgesehen werden, die in der Art von elektrostatischen Feldern zu einer weiteren Lenkung der Wasserstoff- und Sauerstoffströmung führen.

Im unteren Bereich des Gasabscheiders 47 kann eine Abflussbohrung 79 für Kondenswasser angeordnet sein, sodass das Kondenswasser in Pfeilrichtung 22 über eine Rücklaufleitung 21 dem Wassertank 17 zugeführt werden kann.

Bei der Ausbildung der Resonanz-Vorrichtung 70 mit glockenförmigen Körpern 70a, 70b werden ineinander greifende Konuswände 85 bevorzugt, weil bei einer solchen großflächigen Wandanordnung eine gerichtete Strömung erzeugt werden kann.

In Bezug auf Figur 7 und Figur 8 wird darauf hingewiesen, dass die elektrisch isolierenden Rundstäbe 72 im Bereich von radial auswärts gerichteten Ausnehmungen 82 im Bereich der Buchse 83 der Resonanz-Vorrichtung 70 aufgenommen sind. Die hier dargestellte Mittenbohrung 81 dient zur Aufnahme des linken Endes der Anodenwelle 68. Nachdem diese Teile zwar in Figur 15 und 16 auch vorhanden sind, aber nicht eingezeichnet sind, wurde deren Anordnung mit in Klammern gesetzten Bezugszeichen versinnbildlicht.

In Bezug auf Figur 11 wird darauf hingewiesen, dass die Permanentmagnete 59 in Halterungen 92 aufgenommen sind, wobei die Permanentmagnete in vertieft angeordneten Schlitzen in der Wandung der Magnet-Ringbuchse 58 angeordnet sind. Die Magnet-Ringbuchse 58 besteht aus einem geeigneten koerzitiven Material.

In Bezug auf Figur 9 und Figur 10 wird darauf hingewiesen, dass der dort gezeigte Deckel 52 mithilfe von Verschlussschrauben 94 mit dem linken Ende des Reaktorgefäßes 44 befestigt ist.

Die Figur 6 zeigt den Schnitt durch den rechtsseitigen Deckel 102, wo erkennbar ist, dass im Innenraum ein Isolierring 100 mit einer Anzahl von radial gleichmäßig am Umfang verteilt angeordneten Speichen 103 vorhanden ist, wobei sich in den von den Speichen 103 getrennten Durchstromräumen erfindungsgemäß ein unterer, etwa mittiger Sauerstoffbereich 104 für die abgeschiedene Sauerstoffströmung 89 bildet, während sich im oberen Bereich des Deckels eine Wasserstoffwolke 105 mit der abgeschiedenen Wasserstoffströmung 88 bildet.

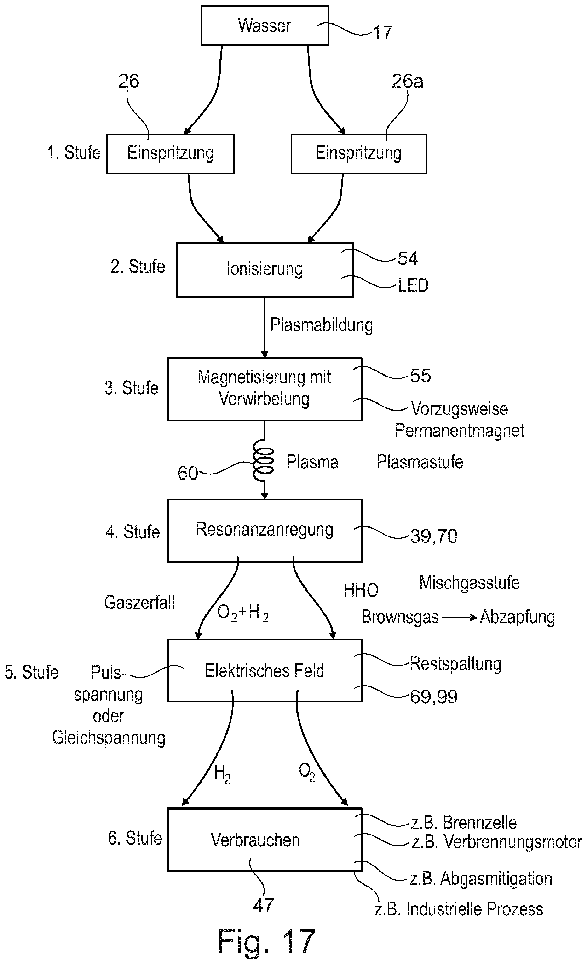

In Figur 17 ist schematisiert ein Verfahrensablauf dargestellt, wobei die einzelnen Teile in hintereinander liegender Folge beschrieben sind.

Es sind grundsätzlich vier Stufen vorhanden, wobei am Ausgang der vierten Stufe bereits schon das HHO-Gas abgezapft werden kann, währenddessen bei einer zusätzlichen Auftrennung in eine Wasserstoff- und Sauerstoffströmung 88, 89 noch zusätzlich ein elektrisches Feld in der fünften Stufe verwendet wird, welches entweder mit einer gepulsten Spannung oder einer Gleichspannung arbeitet, um so die in Figur 6 dargestellte Sauerstoffwolke und Wasserstoffwolke 104, 105 zu erzeugen.

Vorteil des erfindungsgemäßen Verfahrens ist, dass es sich um einen Durchlaufprozess handelt, weil es sich um eine serielle Folge von verschiedenen Prozessstufen gemäß Figur 15 handelt, d.h. es handelt sich um eine in achsialer Richtung fortschreitende Gasströmung, die dynamisch fließt, während bei den üblichen Reaktorgefäßen eine statische Gaswolke vorhanden ist, die konditioniert wird.

Bei den bekannten statischen Verfahren gibt es ein Wasserbad, aus dem heraus eine Gaswolke erzeugt wird, da es sich nicht um ein strömendes Gas handelt, sondern um eine statische Gaswolke. Dies wurde einleitend unter Hinweis auf das WIKIPEDIA-Zitat beschrieben.

Bei der Erfindung besteht der Vorteil, dass mit geringem Energieaufwand durch eine UV-Bestrahlungsvorrichtung 32 und eine daran anschließende Magnetisier-Vorrichtung 34 eine Konditionierung des Wasserdampfstromes gelingt, wobei geringe Energiemengen benötigt werden.

Weitere Vorteil ist, dass die im Strömungsverlauf angeordnete Resonanzvorrichtung 39 die Eigenresonanz des vorkonditionierten Wasserdampfes aufnimmt und mit geringem Energieaufwand weiterkonditioniert. Die noch verbleibende Energie wird für die Aufladung der Kondensatorplatten verwendet, was mit einem erheblich geringeren Energieaufwand verbunden ist als beispielsweise die bekannten Elektrolyseverfahren oder andere vergleichbare statische Verfahren. Somit kann bei geringerem Energieeinsatz eine höhere Gasausbeute erzielt werden, was auf ein gleichvolumiges Reaktorgefäß bezogen ist.

In der Reaktorzelle 28 sind mehrere Steuerparameter veränderbar, wie z.B. die Frequenz der Resonanz-Vorrichtung 39, die Steuerspannung an der Kondensatoranordnung und die Steuerspannung an der Magnetisier-Vorrichtung 34.

Somit können die Verfahrensparameter in weiten Grenzen auch während des Verfahrens geändert werden, um eine optimale Prozessausbeute zu erreichen.

Weil es sich um einen dynamischen Prozess handelt, ist es möglich, durch die Veränderung der Steuerparameter während des Betriebes die Gasausbeute entsprechend einzustellen, was besonders vorteilhaft ist, wenn eine solche Vorrichtung zur Gasgewinnung in einem Kraftfahrzeug angeordnet ist und während des Fahrbetriebes eine bestimmte Gasmenge zur Verfügung gestellt werden muss.

Versuche haben gezeigt, dass eine erfindungsgemässe Reaktorzelle 28 mit Abmessungen von etwa 500 mm Länge und 250 mm Durchmesser bei einem Gewicht von ca. 20 bis 30 kg in der Lage ist, einen Gasstrom aus Wasserstoff- und Sauerstoff und/oder Brown's-Gas im Bereich von 40 cbm/std zu erzeugen. Dabei wird eine elektrische Leistung von im Bereich 60 bis 100 kWh benötigt, falls keine stromerzeugende Brennstoffzelle 29 verwendet wird. Aus diesen Prozessparametern ergibt sich die besondere Geeignetheit einer solchen Vorrichtung 1 für mobile Einsatzzwecke, insbesondere für den Kraftfahrzeugbereich. Darüber hinaus ist ein solcher Gasgenerator für alle Land- Wasser- und Luftfahrzeuge besonders geeignet.

Dies ist ein Vorteil des dynamischen Betriebes, der bei statischen Verfahrensvorrichtungen nicht gegeben ist.

### Zeichnungslegende

- 1.: Vorrichtung zur Gasgewinnung
- 2.: Verbrennungsmotor
- 3.: Zylinderreihe
- 4.: Zylinderreihe
- 5.: Nockenwelle
- 6.: Kurbelwelle
- 7.: Antriebsriemen
- 8.: Luftansaugung
- 9.: Speiseleitung (Wasser)
- 10.: Pfeilrichtung
- 11.: Speiseleitung (Gas) a, b
- 12.: Pfeilrichtung
- 13.: Zylinderkopf
- 14.: Zylinderkopf
- 15.: Anschluss (von 11)
- 16.: Anschluss (von 9)
- 17.: Wassertank
- 18.: Einspritzpumpe
- 19.: Abzweigleitung
- 20.: Speiseventil m. Sensor
- 21.: Rücklaufleitung
- 22.: Pfeilrichtung
- 23.: Signalleitung
- 24.: Steuerleitung (für 18)
- 25.: Steuerleitung (für 26)
- 26.: Einspritzdüse, Einspeisung
- 27.: Steuerrechner
- 28.: Reaktorzelle
- 29.: Brennstoffzelle
- 30.: Stromversorgung
- 31.: Einspritzrichtung 31a
- 32.: UV-Bestrahlungsvorrichtung
- 33.: Lichtstrahl
- 34.: Magnetisier-Vorrichtung
- 35.: Magnetfeld
- 36.: Steuerleitung
- 37.: Steuerleitung
- 38.: Steuerleitung
- 39.: Resonanz-Vorrichtung
- 40.: Kondensator-Feld
- 41.: Kondensator-Feld
- 42.: Kondensator-Feld
- 43.: Steuerleitung
- 44.: Reaktor-Gefäß
- 45.: Innenraum (von 28)
- 46.: Auslauf (von 28)
- 47.: Gasabscheider
- 48.: Pfeilrichtung
- 49.: Entnahmeventil H2
- 50.: Entnahmeventil O2
- 51.: Speiseleitung (für 29)
- 52.: Deckel
- 53.: Düse (für 26)
- 54.: Reaktionsraum (für 32) Ionisierung
- 55.: Reaktionsraum (für 34) Magnetisierung
- 56.: LED-Kette
- 57.: Gehäuse (für 32)
- 58.: Magnet-Ringbuchse
- 59.: Permanent-Magnet
- 60.: Spiral-Strömung
- 61.: Strömungsleitvorrichtung
- 62.: Verwirblerkammer
- 63.: Spitzkegel
- 64.: Ringraum
- 65.: Pfeilrichtung
- 66.: Pfeilrichtung
- 67.: Reaktionskammer
- 68.: Anodenwelle
- 69.: Kathodenscheibe
- 70.: Resonanz-Vorrichtung 70a, 70b
- 71.: Isolierblock
- 72.: Rundstab
- 73.: Durchströmspalt (oben)
- 74.: Durchströmspalt (Welle 68)
- 75.: Pfeilrichtung
- 76.: Pfeilrichtung
- 77.: H2-Speicher
- 78.: O2-Speicher
- 79.: Abluftbohrung
- 80.: Membran
- 81.: Mittenbohrung
- 82.: Ausnehmung (in 81)
- 83.: Buchse
- 84.: Ringspalt
- 85.: Konuswand
- 86.: Konusöffnung
- 87.: Lasche
- 88.: H2-Strömung
- 89.: O2-Strömung
- 90.: Austrittsöffnung
- 91.: transp. Buchse
- 92.: Halterung
- 93.: Schräglinie
- 94.: Verschlussschraube
- 95.: Aufnahme (für 59)
- 96.: Leitfläche
- 97.: Dichtspalt
- 98.: Lochbohrung
- 99.: Anodenscheibe
- 100.: Isolierung (für 68)
- 101.: Dichtfläche
- 102.: Deckel (von 47)
- 103.: Speiche (von 100)
- 104.: Sauerstoffwolke
- 105.: Wasserstoffwolke
- 106.: Zirkulationsleitung (Gas)
- 107.: Kondenswasser
- 108.: Rückschlagventil
- 109.: Isolierring

## Patentansprüche

1. Verfahren zur Gewinnung von Brown's-Gas und/oder Sauerstoff und Wasserstoff, insbesondere für Verbrennungsmotoren oder Brennstoffzellen unter Anwendung eines physikalischen Spaltungsverfahrens unter Anwendung einer Abfolge von unterschiedlichen Erregungsverfahren bei HHO mit anschließender Trennung der Gase H2 und O2, wobei
1.1 Wasser in eine Reaktorzelle (28) eingespeist wird
1.2 danach die Wassermoleküle ionisiert werden
1.3 danach durch Permanentmagneten oder Magnetspulen ausgerichtet werden,
1.4 danach mit einem Radiosignal mit einer bestimmten Frequenz in Schwingung versetzt und einen Plasmazustand erreichen
1.5 wobei In diesem Plasmazustand die Wassermoleküle speziell geformte und angeordnete Elektroden passiert, an denen spezifische Spannungen impulsweise angesteuert anliegen, wodurch eine Teilmenge Wasserstoff und Sauerstoff abgeschieden wird.
1.6 wobei die nicht gespaltene Fraktion des Wassers in die Reaktorzelle (28) zurückgeführt wird und dadurch kontinuierlich höhere Erregungszustände erreicht, wodurch der Wirkungsgrad der Gaserzeugung gesteigert ist

2. Verfahren nach Anspruch 1, **dadurch gekennzeichnet, dass** die Prozessparameter dynamisch skalierbar sind und dass durch die Skalierung der Steuerparameter wie Volumenfluss, Frequenz, Magnetstärke und Spannung die Menge der erzeugten Gase im Betrieb eines Gasverbrauchers dynamisch anpassbar ist.

3. Verfahren nach einem der Ansprüche 1 oder 2, **dadurch gekennzeichnet, dass** der Volumenstrom des Wassers in einem schnelleren hydraulischen und/oder pneumatischen Fluss mehrfach durch die Reaktorzelle (18) geführt wird.

4. Verfahren zur Gewinnung von Brown's-Gas und/oder Sauerstoff und Wasserstoff, insbesondere für Verbrennungsmotoren oder Brennstoffzellen unter Anwendung eines physikalischen Spaltungsverfahrens unter Anwendung einer Abfolge von unterschiedlichen Erregungsverfahren bei HHO mit anschließender Trennung der Gase H2 und O2, wobei das Verfahren in mehreren hintereinander geschalteten Prozessschritten abläuft, und dass
4.1 im ersten Prozessschritt wahlweise eine Einspritzung oder eine Einspeisung von Wasser in den Einlauf der Reaktorzelle (18) erfolgt,
4.2 dass in einem zweiten Prozessschritt eine Ionisierung des eingetragenen Wassers mithilfe von UV-Strahlen stattfindet und hieraus ein Plasma entsteht,
4.3 dass im dritten Prozessschritt eine Magnetisierung des gebildeten Plasmas mit Bildung eines in Längsrichtung der Reaktorzelle gerichteten Verwirbelungsstromes erfolgt,
4.4 dass in einer vierten Stufe eine Resonanzerregung des so gebildeten, verwirbelten Plasmas erfolgt und
4.5 dass am Ausgang der vierten Stufe ein Gaszerfall und wahlweise entweder eine Aufspaltung in Wasserstoff und Sauerstoff erfolgt und/oder ein Mischgas in Form eines HHO-Gases (Brown's-Gas) vorliegt.

5. Verfahren nach Anspruch 4, **dadurch gekennzeichnet, dass** in einer fünften Stufe eine weitere Abtrennung des Gasgemisches aus Wasserstoff und Sauerstoff erfolgt, und dass im Bereich eines elektrischen Feldes mit einer Pulsspannung oder einer Gleichspannung eine Aufspaltung des Gasstromes in Wasserstoff und Sauerstoff erfolgt.

6. Verfahren nach einem der Ansprüche 1 bis 4, **dadurch gekennzeichnet, dass** in der dritten Stufe eine Magnetisierung mit einer spiralförmigen Verwirbelung des Plasmastromes stattfindet und dass die Magnetisierung mithilfe von Permanentmagneten (59) erfolgt, die gleichmäßig am Umfang einer Magnet-Ringbuchse (58) verteilt angeordnet sind

7. Verfahren nach einem der Ansprüche 1 bis 4, **dadurch gekennzeichnet, dass** in der dritten Stufe eine Magnetisierung mit einer spiralförmigen Verwirbelung des Plasmastromes stattfindet und dass die Magnetisierung vorzugsweise mithilfe bestromter elektrischer Spulen erfolgt.

8. Verfahren nach einem der Ansprüche 1 bis 7, **dadurch gekennzeichnet, dass** in der vierten Stufe eine Resonanzerregung des Plasmastromes mit einer Frequenzerregung im Frequenzbereich von 100 bis 200 MHz erfolgt.

9. Verfahren nach einem der Ansprüche 1 bis 8, **dadurch gekennzeichnet, dass** in der fünften Stufe ein elektrisches Feld gebildet wird, durch welches der Plasmastrom hindurch strömt und dass das elektrische Feld durch mindestens eine mit Lochbohrungen (98) versehene zusammengesetzte, gegensätzlich elektrisch gepolte Anoden- und Kathodenscheibe (69, 99) gebildet ist, durch deren Lochbohrungen (98) der Plasmastrom hindurch strömt.

10. Vorrichtung zur Gewinnung von Brown's-Gas und/oder Sauerstoff und Wasserstoff in einer Reaktorzelle (28), insbesondere für Verbrennungsmotoren oder Brennstoffzellen unter Anwendung eines physikalischen Spaltungsverfahrens unter Anwendung einer Abfolge von unterschiedlichen Erregungsverfahren bei HHO mit anschließender Trennung der Gase H2 und O2, wobei die Reaktorzelle (28) mehrere hintereinander geschaltete Reaktionsräume aufweist, und dass
4.1 im ersten Prozessschritt wahlweise eine Einspritzung (18) oder eine Einspeisung (26; 52, 53) von Wasser in den Einlauf einer Reaktorzelle (28) erfolgt,
4.2 dass in einem zweiten Prozessschritt eine Ionisierung des eingetragenen Wassers mithilfe von UV-Strahlen (32, 33; 54, 56) stattfindet und hieraus ein Plasma entsteht,
4.3 dass im dritten Prozessschritt eine Magnetisierung (34, 35, 58, 59) des gebildeten Plasmas mit Bildung einer in Längsrichtung des Reaktors strömenden Spiralströmung (60) erfolgt,
4.4 dass in einer vierten Stufe eine Resonanzerregung des Plasmastroms in einer Resonanzvorrichtung (39, 70) erfolgt und
4.5 dass am Ausgang der vierten Stufe ein Gaszerfall und wahlweise entweder eine Aufspaltung in Wasserstoff (105) und Sauerstoff (104) erfolgt und/oder ein Mischgas in Form eines HHO-Gases (Brown's-Gas) vorliegt.

11. Vorrichtung nach Anspruch 10, **dadurch gekennzeichnet, dass** in einer fünften Stufe ein elektrisches Feld gebildet ist, durch welches der Plasmastrom hindurch strömt und dass das elektrische Feld durch eine Mehrzahl von in gegenseitigem Abstand hintereinander angeordneten elektrisch gegensätzlich geladenen und mit Lochbohrungen (98) versehenen Anoden- und Kathodenscheiben (69, 99) gebildet ist.

12. Vorrichtung nach Anspruch 11, **dadurch gekennzeichnet, dass** in einer fünften Stufe in der Reaktorzelle (28) ein elektrisches Feld gebildet ist, durch welches der Plasmastrom hindurch strömt und dass das elektrische Feld durch mindestens eine mit Lochbohrungen (98) versehene zusammengesetzte Anoden- und Kathodenscheibe (69, 99) gebildet ist.

13. Vorrichtung nach Anspruch 12, **dadurch gekennzeichnet, dass** die zusammengesetzte Anoden-Kathodenscheibe (69, 99) aus zwei elektrisch gegensätzlich gepolten, mit Lochbohrungen (98) versehenen Ringscheiben besteht, von denen die eine Ringscheibe mit dem kleineren Außendurchmesser als Anodenscheibe (99) in die als Kathodenscheibe (69) ausgebildete, einen größeren Außendurchmesser aufweisende andere Ringscheibe mit seinem Außenumfang elektrisch isoliert bündig eingepasst ist

14. Vorrichtung nach einem der Ansprüche 10 bis 13, **dadurch gekennzeichnet, dass** die in der vierten Stufe verwendete Resonanz-Vorrichtung (70) aus mindestens zwei im gegenseitigen Abstand und isoliert voneinander angeordneten glockenförmigen Körpern (70a, 70b) besteht, die elektrisch leitfähig sind, wobei an den beiden glockenförmigen Körpern (70a, 70b) eine Mikrowellenfrequenz angelegt ist, und dass der Plasmastrom durch die miteinander fluchtenden Mittenöffnung der Körper (70a, 70b) hindurch strömt.

15. Vorrichtung nach einem der Ansprüche 10 bis 14 zur Ausführung des Verfahrens nach mindestens einem der Ansprüche 1 bis 9, **dadurch gekennzeichnet, dass** eine Teilmenge von Wasser aus einem Wassertank (17) über ein Speiseventil (20) und eine Einspritzpumpe (18) unter Druck in Anschlussleitungen (16) am Zylinderkopf (13, 14) eines Verbrennungsmotors (2) eingespritzt wird und dass in den Zylinderkopf (13, 14) jeweils zwei weitere Speiseleitungen (11a, 11b) münden, über welche das von der Vorrichtung (1) erzeugte brennbare Gas (H2 und/oder Brown's Gas) einleitbar ist.

## Geänderte Patentansprüche

### Geänderte Patentansprüche gemäss Regel 137(2) EPÜ.

1. Verfahren zur Gewinnung von Brown's-Gas und/oder Sauerstoff und Wasserstoff, insbesondere für Verbrennungsmotoren oder Brennstoffzellen unter Anwendung eines physikalischen Spaltungsverfahrens unter Anwendung einer Abfolge von unterschiedlichen Erregungsverfahren bei HHO mit anschließender Trennung der Gase H2 und O2, wobei das Verfahren in mehreren hintereinander geschalteten Prozessstufen abläuft, und dass
1.1 in der ersten Stufe Wasser in eine Reaktorzelle (28) eingespeist wird,
1.2 in der zweiten Stufe die Wassermoleküle ionisiert werden,
1.3 in der dritten Stufe die Wassermoleküle durch Permanentmagneten oder Magnetspulen ausgerichtet werden, 1.4 in der vierten Stufe die Wassermoleküle mit einem Frequenzgenerator mit einer Frequenzerregung im Mikrowellenbereich in Schwingung versetzt werden und einen Plasmazustand erreichen,
1.5 wobei in diesem Plasmazustand die Wassermoleküle über eine Anordnung von Elektroden geführt werden, die quer zur Strömungsrichtung angeordnet sind und die permanent und/oder impulsweise mit einer spezifischen Impuls- und/oder Gleichspannung beaufschlagt werden, wodurch eine Teilmenge Wasserstoff und Sauerstoff abgeschieden wird.
1.6 wobei die nicht gespaltene Fraktion des Wassers in die Reaktorzelle (28) zurückgeführt wird und dadurch kontinuierlich höhere Erregungszustände erreicht, wodurch der Wirkungsgrad der Gaserzeugung gesteigert ist.

2. Verfahren nach Anspruch 1, **dadurch gekennzeichnet, dass** die Prozessparameter dynamisch skalierbar sind und dass durch die Skalierung der Steuerparameter wie Volumenfluss, Frequenz, Magnetstärke und Spannung die Menge der erzeugten Gase im Betrieb eines Gasverbrauchers dynamisch anpassbar ist.

3. Verfahren nach einem der Ansprüche 1 oder 2, **dadurch gekennzeichnet, dass** der Volumenstrom des Wassers in einem schnelleren hydraulischen und/oder pneumatischen Fluss mehrfach durch die Reaktorzelle (18) geführt wird.

4. Verfahren nach einem der Ansprüche 1 bis 3, **dadurch gekennzeichnet, dass** in der dritten Stufe eine Magnetisierung des gebildeten Plasmas mit Bildung eines in Längsrichtung der Reaktorzelle gerichteten Verwirbelungsstromes erfolgt.

5. Verfahren nach einem der Ansprüche 1 bis 4, **dadurch gekennzeichnet, dass** in der vierten Stufe eine Resonanzerregung des so gebildeten, verwirbelten Plasmas erfolgt und dass am Ausgang der vierten Stufe ein Gaszerfall und wahlweise entweder eine Aufspaltung in Wasserstoff und Sauerstoff erfolgt und/oder ein Mischgas in Form eines HHO-Gases (Brown's-Gas) vorliegt.

6. Verfahren nach einem der Ansprüche 1 bis 5, **dadurch gekennzeichnet, dass** in einer fünften Stufe eine weitere Abtrennung des Gasgemisches aus Wasserstoff und Sauerstoff erfolgt, und dass im Bereich eines elektrischen Feldes mit einer Pulsspannung oder einer Gleichspannung eine Aufspaltung des Gasstromes in Wasserstoff und Sauerstoff erfolgt.

7. Verfahren nach einem der Ansprüche 1 bis 5, **dadurch gekennzeichnet, dass** in der dritten Stufe eine Magnetisierung mit einer spiralförmigen Verwirbelung des Plasmastromes stattfindet und dass die Magnetisierung mithilfe von Permanentmagneten (59) erfolgt, die gleichmäßig am Umfang einer Magnet-Ringbuchse (58) verteilt angeordnet sind

8. Verfahren nach einem der Ansprüche 1 bis 5, **dadurch gekennzeichnet, dass** in der dritten Stufe eine Magnetisierung mit einer spiralförmigen Verwirbelung des Plasmastromes stattfindet und dass die Magnetisierung vorzugsweise mithilfe bestromter elektrischer Spulen erfolgt.

9. Verfahren nach einem der Ansprüche 1 bis 8, **dadurch gekennzeichnet, dass** in der fünften Stufe ein elektrisches Feld gebildet wird, durch welches der Plasmastrom hindurch strömt und dass das elektrische Feld durch mindestens eine mit Lochbohrungen (98) versehene zusammengesetzte, gegensätzlich elektrisch gepolte Anoden- und Kathodenscheibe (69, 99) gebildet ist, durch deren Lochbohrungen (98) der Plasmastrom hindurch strömt.

10. Vorrichtung zur Gewinnung von Brown's-Gas und/oder Sauerstoff und Wasserstoff in einer Reaktorzelle (28), insbesondere für Verbrennungsmotoren oder Brennstoffzellen unter Anwendung eines physikalischen Spaltungsverfahrens unter Anwendung einer Abfolge von Prozessstufen mit unterschiedlichen Erregungsverfahren bei HHO mit anschließender Trennung der Gase H2 und O2, wobei die Reaktorzelle (28) mehrere hintereinander geschaltete Reaktionsräume aufweist, und dass
4.1 in der ersten Stufe wahlweise eine Einspritzung (18) oder eine Einspeisung (26; 52, 53) von Wasser in den Einlauf einer Reaktorzelle (28) erfolgt,
4.2 dass in einer zweiten Stufe eine Ionisierung des eingetragenen Wassers mithilfe einer UV-Bestrahlungsvorrichtung (32, 56) stattfindet und hieraus ein Plasma entsteht,
4.3 dass in der dritten Stufe eine Magnetisierung (34, 35, 58, 59) mittels Permanentmagneten oder Magnetspulen des gebildeten Plasmas mit Bildung einer in Längsrichtung des Reaktors strömenden Spiralströmung (60) erfolgt,
4.4 dass in einer vierten Stufe eine Resonanzerregung des Plasmastroms in einer Resonanzvorrichtung (39, 70) erfolgt, die aus mindestens zwei im gegenseitigen Abstand und isoliert voneinander angeordneten glockenförmigen Körpern (70a, 70b) besteht, die elektrisch leitfähig sind und dass zwischen den Körpern ein hochfrequentes Mikrowellenresonanzfeld erzeugbar ist, und
4.5 dass am Ausgang der vierten Stufe ein Gaszerfall und wahlweise entweder eine Aufspaltung in Wasserstoff (105) und Sauerstoff (104) erfolgt und/oder ein Mischgas in Form eines HHO-Gases (Brown's-Gas) vorliegt.

11. Vorrichtung nach Anspruch 10, **dadurch gekennzeichnet, dass** in einer fünften Stufe ein elektrisches Feld gebildet ist, durch welches der Plasmastrom hindurch strömt und dass das elektrische Feld durch eine Mehrzahl von in gegenseitigem Abstand hintereinander angeordneten elektrisch gegensätzlich geladenen und mit Lochbohrungen (98) versehenen Anoden- und Kathodenscheiben (69, 99) gebildet ist.

12. Vorrichtung nach Anspruch 11, **dadurch gekennzeichnet, dass** in einer fünften Stufe in der Reaktorzelle (28) ein elektrisches Feld gebildet ist, durch welches der Plasmastrom hindurch strömt und dass das elektrische Feld durch mindestens eine mit Lochbohrungen (98) versehene zusammengesetzte Anoden- und Kathodenscheibe (69, 99) gebildet ist.

13. Vorrichtung nach Anspruch 12, **dadurch gekennzeichnet, dass** die zusammengesetzte Anoden-Kathodenscheibe (69, 99) aus zwei elektrisch gegensätzlich gepolten, mit Lochbohrungen (98) versehenen Ringscheiben besteht, von denen die eine Ringscheibe mit dem kleineren Außendurchmesser als Anodenscheibe (99) in die als Kathodenscheibe (69) ausgebildete, einen größeren Außendurchmesser aufweisende andere Ringscheibe mit seinem Außenumfang elektrisch isoliert bündig eingepasst ist

14. Vorrichtung nach einem der Ansprüche 10 bis 13, **dadurch gekennzeichnet, dass** in der vierten Stufeder Plasmastrom durch die miteinander fluchtenden Mittenöffnung der glockenförmigen Körper (70a, 70b) hindurch strömt.

15. Vorrichtung nach einem der Ansprüche 10 bis 14 zur Ausführung des Verfahrens nach mindestens einem der Ansprüche 1 bis 9, **dadurch gekennzeichnet, dass** eine Teilmenge von Wasser aus einem Wassertank (17) über ein Speiseventil (20) und eine Einspritzpumpe (18) unter Druck in Anschlussleitungen (16) am Zylinderkopf (13, 14) eines Verbrennungsmotors (2) eingespritzt wird und dass in den Zylinderkopf (13, 14) jeweils zwei weitere Speiseleitungen (11a, 11b) münden, über welche das von der Vorrichtung (1) erzeugte brennbare Gas (H2 und/oder Brown's Gas) einleitbar ist.
